# EUROPEAN PATENT SPECIFICATION

(11) **EP 1 889 782 B1**
(45) Date of publication and mention of the grant of the patent: **26.08.2009**
(21) Application number: 07020909.3
(22) Date of filing: 02.10.2003
(51) Int. Cl.: B63J 3/02, B63H 21/17

(54) **Power generation system of ship**
Stromerzeugungssystem für Schiffe
Système de production d'énergie électrique pour bateau

(43) Date of publication of application: 20.02.2008
(62) Divisional of application: 03748692.5
(73) Proprietor: Yanmar Co., Ltd., Osaka-shi, Osaka 530-0013 (JP)
(72) Inventor: Mori, Hisanori Kanzaki Kokyukoki MFG. Co., Ltd., Amagasaki-shi, Hyogo 661-0981 (JP); Imanaka, Toshio Kanzaki Kokyukoki MFG. Co., Ltd., Amagasaki-shi, Hyogo 661-0981 (JP)
(74) Representative: Jostarndt, Hans-Dieter

(56) References cited:
- DE-A1- 10 017 396
- DE-A1- 19 501 463
- DE-A1- 19 623 914
- GB-A- 2 357 484
- US-A- 3 962 933

## Description

### Technical Field of the Invention

The present invention relates to an electric power generating system for supplying electric power to inboard equipments of a vessel.

### Background Art

A conventional vessel-propelling machine comprises an internal combustion engine and a transmission, so that a propeller connected to the transmission is driven by the driving force of the internal combustion engine decelerated through the transmission.

As disclosed in Japanese Laid-open Gazette No. 2003-81189, an example of the propelling machine supplies output power from the internal combustion engine for propelling a vessel to a generator as well as the transmission, so as to drive the propeller connected to the transmission and to make the generator stably generate electric power.

Referring to a conventional system for cooling the generator, a flywheel is provided with a cooling fan, and a flywheel housing and a mounting flange are formed with respective vent holes for cooling the generator. Since a casing of the generator is unopen, the generator and the casing thereof, whose temperature become highest in the machine, are insufficiently cooled, i.e., the cooling efficiency is insufficient. Further, the generator is liable to corrode or to shorten its life because water caused by dew condensation is collected inside the casing. If the cooling system uses water for cooling, the system is entirely complicated because it requires piping and a pump. Such a complicated system is difficult to have maintenance and is expensive.

As disclosed in Japanese Laid-open Gazette No. 2003-81189, in a conventional well-known system, a generator for generating electric power for inboard equipments of a vessel is interposed between an internal combustion engine and a decelerating transmission so as to stably supply the inboard equipments through an inverter.

Conventionally, a single inverter is provided to the conventional generator so as to convert electric power generated by the power generator into an alternating current to be supplied to the inboard equipments. Therefore, the inverter must be an expensive high-power unit. Further, if the generator interposed between the internal combustion engine and the transmission is enclosed in a casing, it requires means for taking the output power of the generator outward from the casing. Further, the generator is assembled into a vessel-propelling machine at need, and removed from the vessel-propelling machine if it is unnecessary. Therefore, an output portion of the internal combustion engine and an input portion of the transmission have to be changed in dimension for attachment thereof depending on whether or not the generator is attached, thereby increasing the number of required components and costs.

Moreover, the conventional vessel-propelling machine, in which the internal combustion engine, the generator and the transmission are integrally assembled, is mounted onto a vessel by supporting the integral combustion engine onto the vessel through a vibro-isolating member. However, in the conventional vessel-propelling machine, the position for attachment of the vibro-isolating member is limited, so that the vessel-propelling machine cannot be easily installed to various kinds of vessels.

To solving the above-mentioned problems, an object of the present invention is to provide a vessel-propelling machine, in which an internal combustion engine for propelling a vessel also serves as an engine for generating electric power, provided with a casing including a water-draining system for preventing an electric power generator therein from corrosion and life degradation, thereby ensuring a simple and inexpensive electric power generating and cooling system in the vessel-propelling machine. Another object of the present invention is to provide a vessel-propelling machine which can be easily installed to various kinds of vessels, and which can be equipped with an inexpensive electric power generator ensuring sufficient total output power by easy assembling work and wiring.

Furthermore, German Publication No. DE 195 01 463 A1, whis is considered to be the closest prior art, discloses a system in which the crankshaft of an engine is connected to a hollow shaft via an elastic coupling and an adapter ring. The hollow shaft is connected to a transmission. The electric power generator is driven by the output shaft of the transmission. Therefore, the electric power generator is disposed in series behind the transmission.

### Disclosure of the Invention

An electric power generating system of a vessel according to the present invention comprises an electric power generator disposed on a drive train from a crankshaft of an internal combustion engine to a transmission for propelling the vessel. A casing which houses the generator is provided on its outer peripheral surface with a plurality of fins or ribs. Preferably, the fins or the ribs are arranged in parallel to the crankshaft. Holes open into the casing are provided under the fins or ribs and substantially parallel to the fins or ribs. Therefore, heat can be radiated from the generator casing nearest to the generator so as to enhance the cooling efficiency. Further, the generator casing is strengthened by the fins or ribs provided thereon. Further, since the holes are disposed under the fins or ribs, the fins or ribs prevent vertically dropping water from entering the generator casing through the holes. Furthermore, since the holes are disposed substantially parallel to the fins or ribs, the holes become substantially parallel to the crankshaft, thereby ensuring smooth circulation of the cooling air, i.e., enhancing the air-cooling efficiency.

Preferably, the casing is made by casting, so that an inner peripheral surface of the casing is sloped for drafting a core. A drain hole is formed on a lower side of the sloped surface. Alternatively, a drain hole is formed at a lower portion of another casing connected to the lower side of the sloped surface of the generator casing. Therefore, water accumulated inside the generator casing produced by dew condensation or another reason can be drained so as to prevent the generator from corrosion and life degradation.

A plurality of tandem electric power generators can be disposed between the internal combustion engine and the transmission for propelling the vessel. An attachment part of the casing on the side toward the internal combustion engine is sized as large as an attachment part of the power input side of the transmission, and an attachment part of the casing on the side toward the transmission is sized as large as an attachment part of the power output side of the internal combustion engine. In this way, the tandem generators can be disposed so as to ensure required large electric output power. The attachment part of the power output part of the internal combustion engine and the attachment part of the power input part of the transmission do not be changed depending on whether or not each of the attachment parts is attached to the generator, thereby reducing the number of parts, and facilitating attachment and detachment of the generators.

An electric power generating system of a vessel according to the present invention comprises a flywheel and a generator. The flywheel is disposed on a crankshaft of an internal combustion engine and connected to an input shaft of a transmission for propelling the vessel. The generator is disposed on a drive train from the flywheel to the transmission for propelling the vessel. A permanent magnet used as a rotor of the generator is attached onto a rotary member removably connected to the flywheel and the transmission. A stator coil of the generator is fixed to a casing, and a reentrant is partially provided between the casing and an outer peripheral surface of the stator coil so as to pass air therethrough between spaces in the casing in front and rear of the stator coil. Preferably, the rotary member, which rotates the rotor, is a hollow shaft connected to the transmission through a directly or indirectly combined elastic joint. The rotary member may be a hollow shaft provided on its end surface with an attachment part to be fitted to a cooling fan. The rotary member may be a hollow shaft provided on its outer peripheral surface with vanes. Preferably, the reentrant is connected with a hole opened on an outside surface of the casing. A fin or a rib may be provided above the hole. The rotary member with the rotor fixed thereto connects the flywheel to the transmission, thereby reducing a parts count and costs. The efficiency of cooling the generator can be enhanced by the reentrants provided between the casing and the stator, the holes connected with the reentrants, the fins or ribs provided above the holes, and the fan attached to the rotary member.

A power generating system of a vessel according to the present invention comprises an electric power generator disposed on a drive train from a crankshaft of an internal combustion engine to a transmission for propelling the vessel, wherein a rectifying and smoothing device converts output power of the generator into direct current, and a plurality of inverters convert the direct current into alternating current so as to supply it to inboard equipments. Preferably, if a set of output cables for respective phases of the generator is supposed as a unit of output cable, the output power of the generator is taken out by the unit of output cable and converted into direct current by the rectifying and smoothing device, and the direct current is branched and connected to the inverters in parallel. Alternatively, an output part of the generator may be connected with units of output cables connected to respective rectifying and smoothing devices, so that the rectifying and smooth devices convert the output power of the generator into respective direct currents, and the inverters convert the respective direct currents into respective alternating currents. Therefore, electric power can be supplied in a wide range of rotational speed of the engine, and small inverters can be used so as to save costs while keeping the required total capacity of electric power.

A power generating system of a vessel according to the present invention comprises an electric power generator disposed on a drive train from a crankshaft of an internal combustion engine to a transmission for propelling the vessel. A casing housing the generator is provided with a hole for wiring through which an output cable of the generator can be taken out from the casing. Preferably, a connector or a terminal stand is attached into the hole for wiring, wherein one side of the connector or the terminal is connected with the output cable of the generator, and the other side thereof is connected with an outer cable. Such an arrangement for easily taking out the output cable facilitates for easy attachment work of the output cable for its maintenance or the like. An outer cable can be easily attached or removed to and from the connector or the terminal, thereby easing wiring work.

Furthermore, according to the present invention, a mounting leg for mounting a propelling machine onto a body of the vessel is attached onto an outer peripheral surface of the casing, or onto an attachment portion formed on the outer peripheral surface of the casing. Therefore, besides mounting legs used when the generator is not mounted, the mounting legs can be attached to the outer periphery of the casing, so that a suitable mounting method can be selected corresponding to conditions of the target vessel so as to suit the casing with various kinds of vessels easily.

### Brief Description of the Drawings

Fig. 1 is a general systematic diagram of a vessel-propelling machine.
Fig. 2 is a side view of a sail-drive propelling machine of a vessel.
Fig. 3 is a side view of a marine-gear propelling machine of a vessel.
Fig. 4 is a sectional side view of an electric power generator portion of a vessel-propelling machine.
Fig. 5 is a sectional side view of an electric power generator portion of a vessel-propelling machine according to a second embodiment.
Fig. 6 is a sectional side view of an electric power generator portion of a vessel-propelling machine according to a third embodiment.
Fig. 7 is a sectional side view of an electric power generator whose rotary shaft is disposed eccentrically to a crankshaft of an internal combustion engine or a rotary shaft of a transmission.
Fig. 8 is a sectional front view of the electric power generator.
Fig. 9 is a sectional side view of a reshaped electric power generator whose rotary shaft is disposed eccentrically to a crankshaft of an internal combustion engine or a rotary shaft of a transmission.
Fig. 10 is a sectional side view of an air-cooled electric power generator.
Fig. 11 is a systematic diagram of a water-cooled electric power generator provide with a cooling-water circuit introducing water from the outside of vessel.
Fig. 12 is a sectional side view of a water-cooled electric power generator having a casing formed therein with a cooling-water circuit.
Fig. 13 is a systematic diagram of a water-cooled electric power generator provided with a cooling-water circuit circulating water within a vessel.
Fig. 14 is a general systematic diagram of a conventional vessel-propelling machine.
Fig. 15 is a general systematic diagram of a conventional vessel-propelling machine according to a second embodiment.
Fig. 16 is a general systematic diagram of a conventional vessel-propelling machine according to a third embodiment.

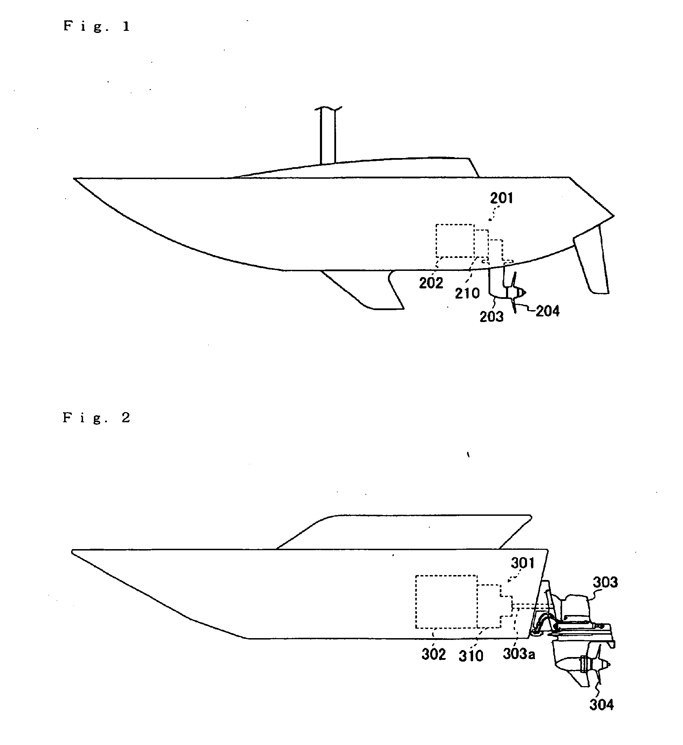

Fig. 1 is a schematic side view of a vessel having a sail-drive propelling machine.
Fig. 2 is a schematic side view of a boat having a stern-drive propelling machine.

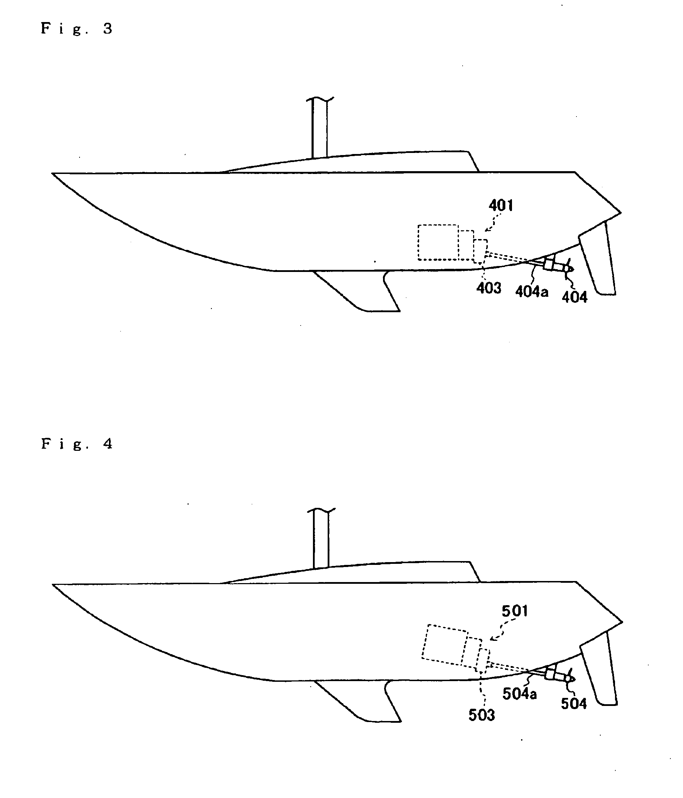

Fig. 3 is a schematic side view of a boat having a (angle type) marine-gear propelling machine.
Fig. 4 is a schematic side view of a boat having a (parallel type) marine-gear propelling machine.

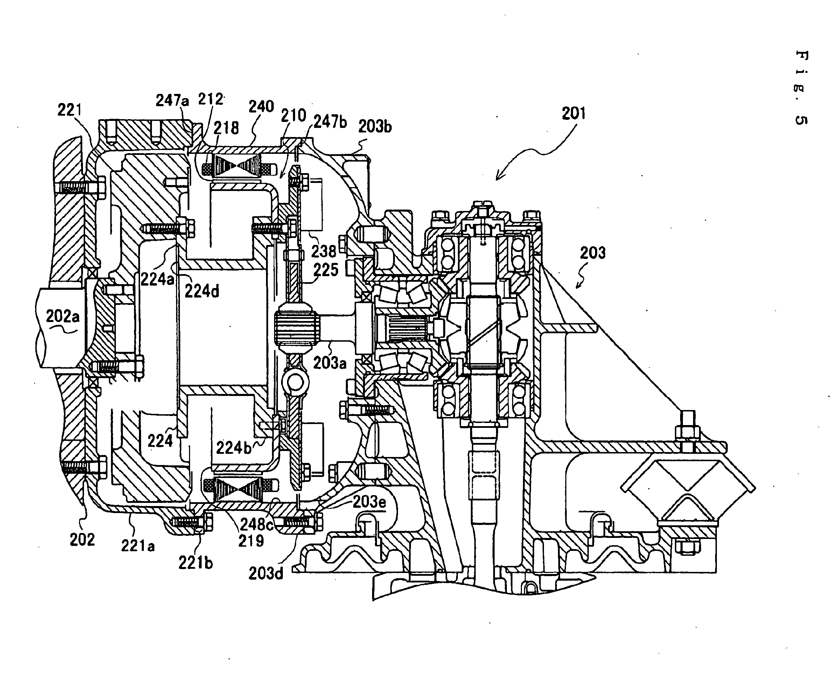

Fig. 5 is a sectional side view of a propelling machine according to a first embodiment.

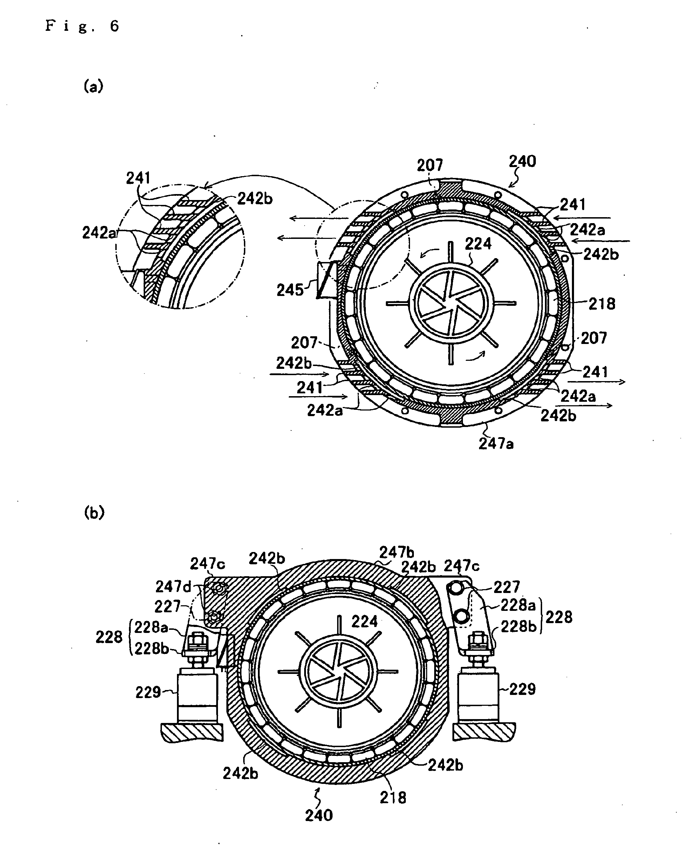

Fig. 6(a) is a sectional view of a casing of an electric power generator in the propelling machine according to the first embodiment.
Fig. 6(b) is a rear view of the casing.

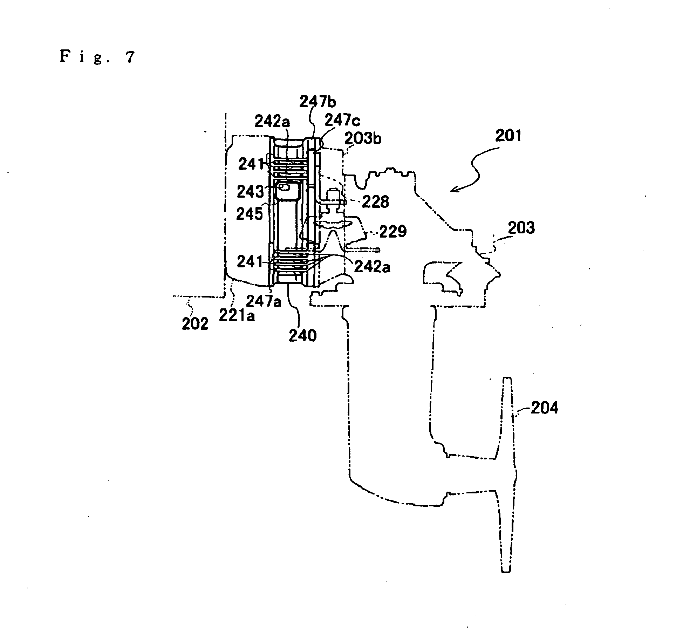

Fig. 7 is a side view of the propelling machine of the first embodiment.

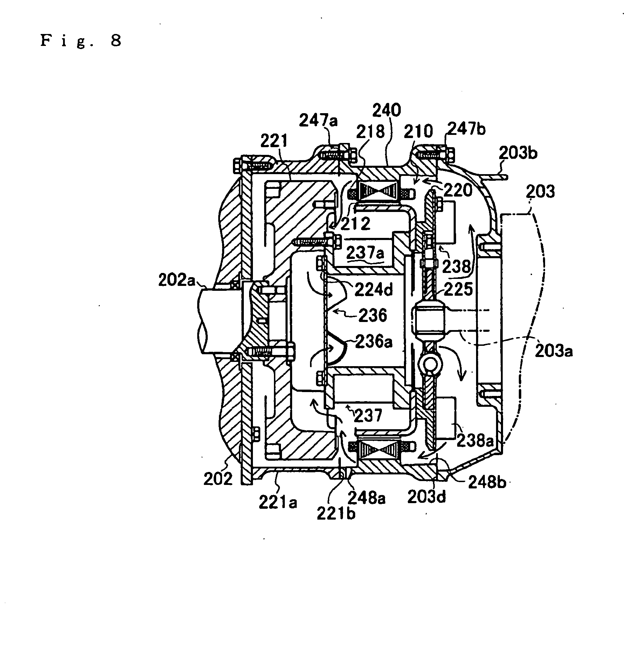

Fig. 8 is a sectional side view of the casing of the electric power generator having a drain hole in the propelling machine of the first embodiment.

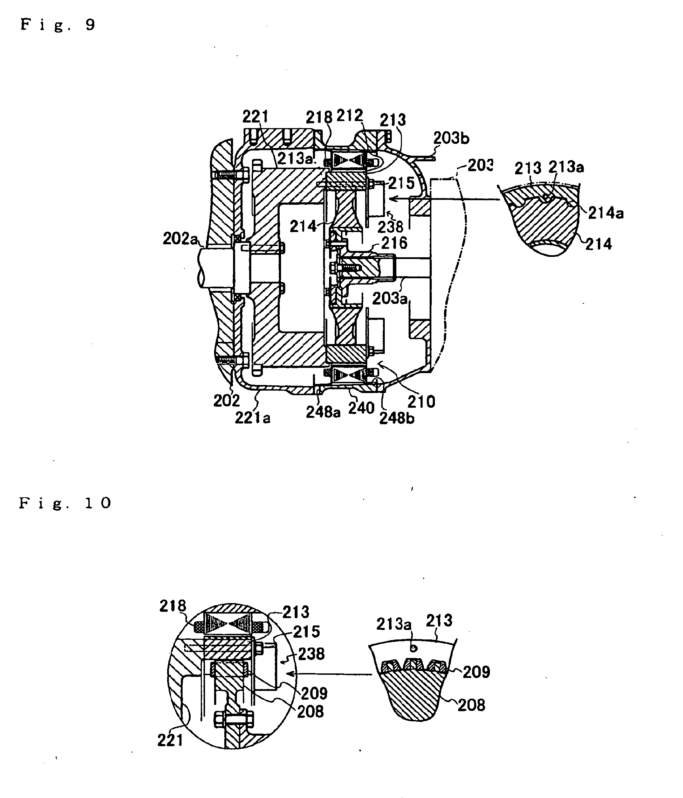

Fig. 9 is a sectional side view of another electric power generator in the propelling machine of the first embodiment.
Fig. 10 is a sectional side view of another electric power generator in the propelling machine of the first embodiment.

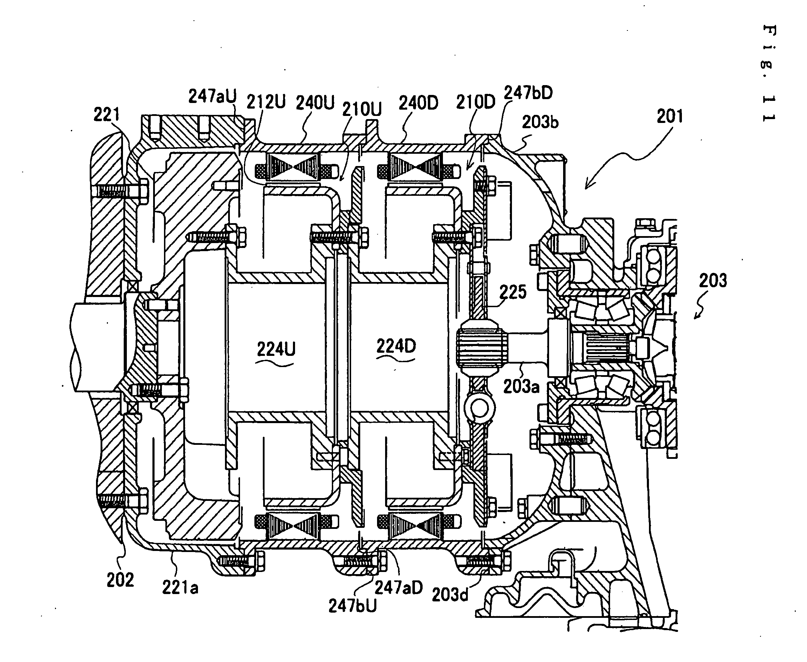

Fig. 11 is a sectional side view of a propelling machine having a plurality of electric power generators.

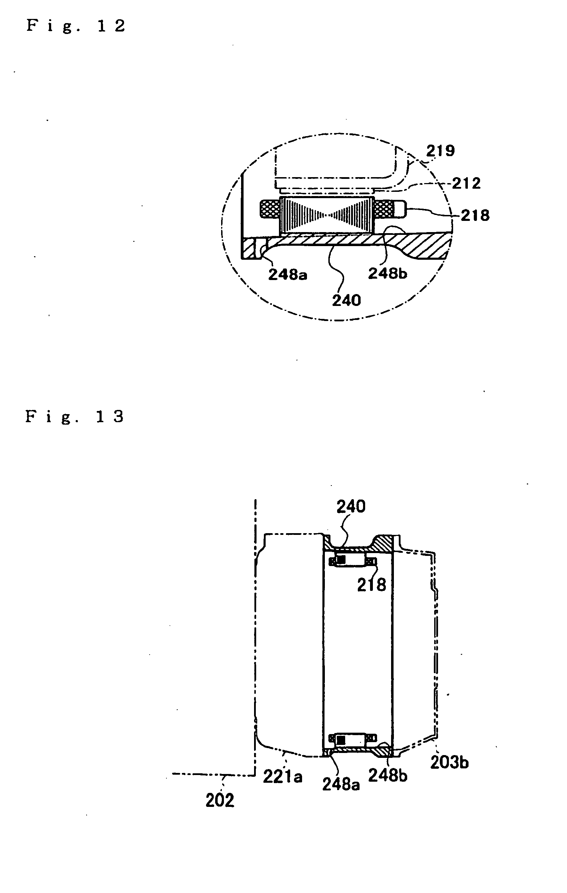

Fig. 12 is a partial macrograph of the casing of the electric power generator, having the drain hole, in the propelling machine of the first embodiment.
Fig. 13 is a side view of the casing.

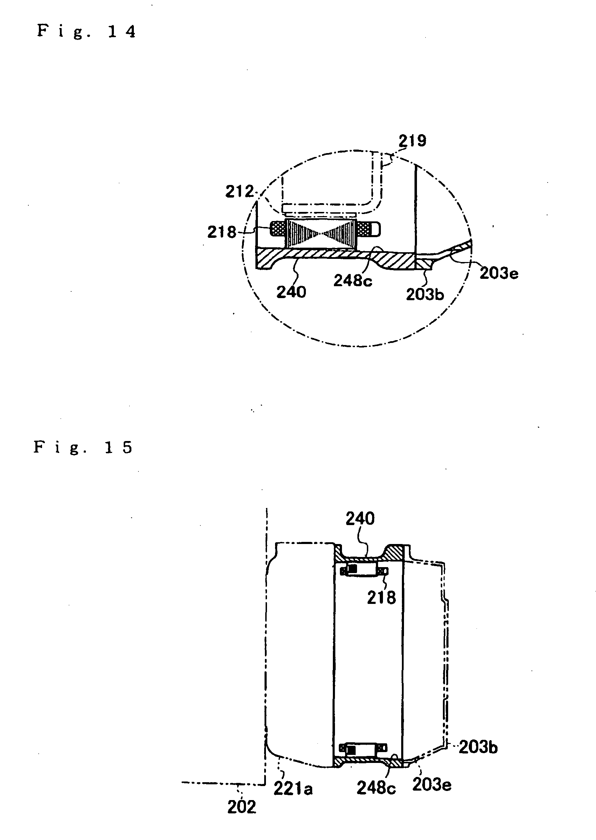

Fig. 14 is a partial macrograph of the casing of the electric power generator, having a reshaped drain hole, in the propelling machine of the first embodiment.
Fig. 15 is a side view of the casing.

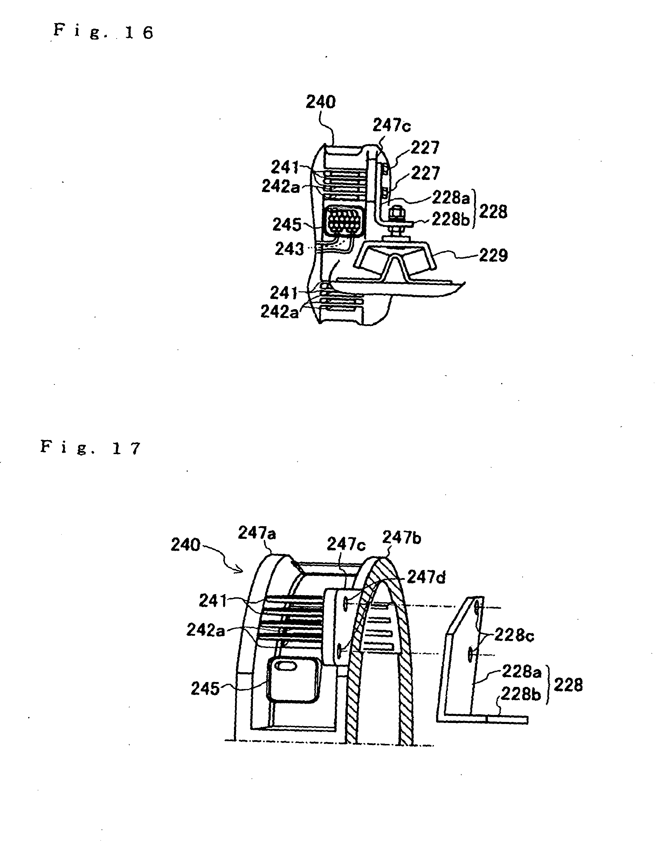

Fig. 16 is a side view of the propelling machine of the first embodiment installed with a leg.
Fig. 17 is a perspective view of the above.

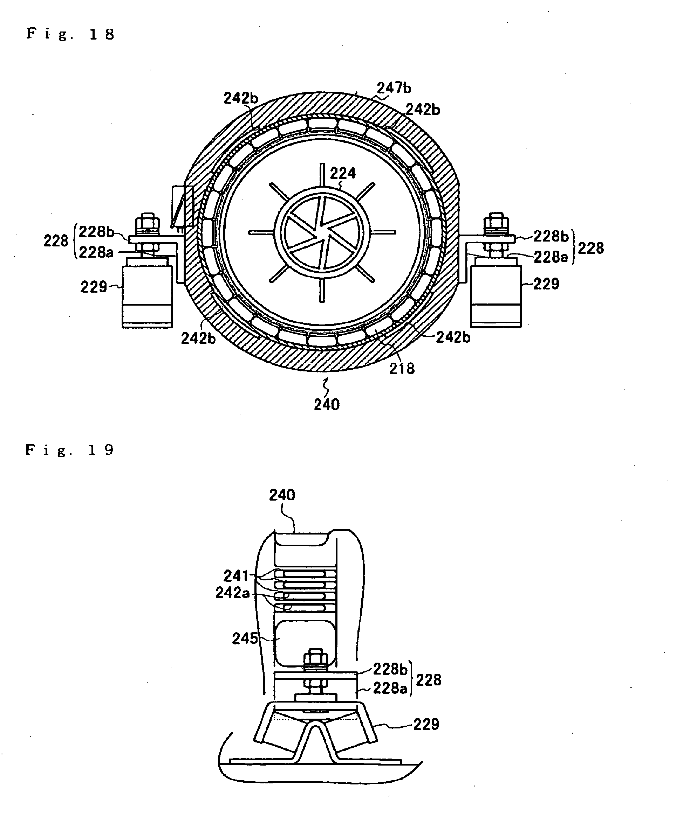

Fig. 18 is a rear view of the propelling machine of the first embodiment installed with other legs.
Fig. 19 is a side view of the above.

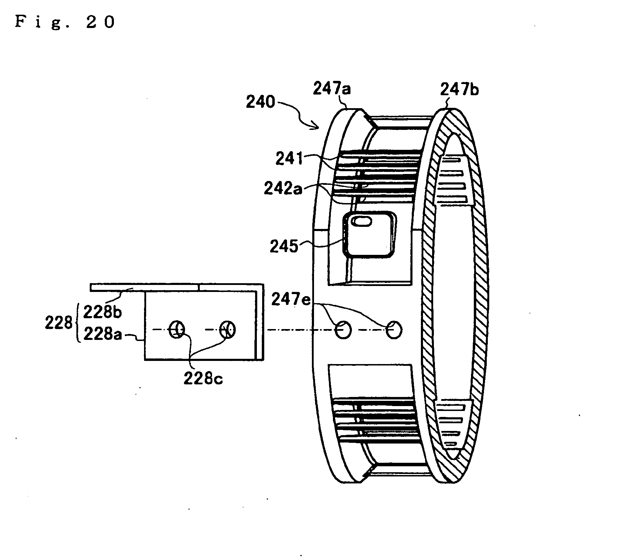

Fig. 20 is a perspective view of the above.

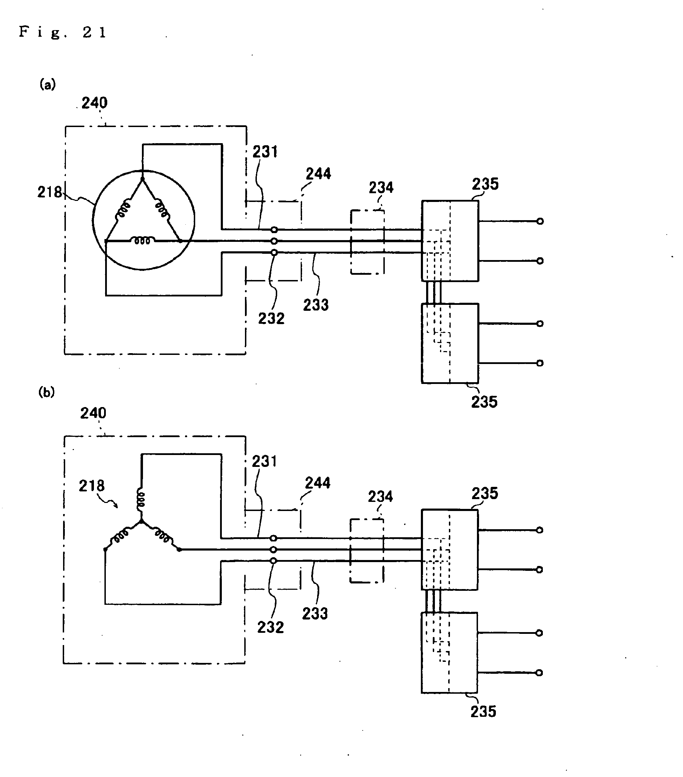

Fig. 21 (a) is a circuit diagram of an electric power output route using a delta connection.
Fig. 21 (b) is a circuit diagram of an electric power output route using a Y connection.

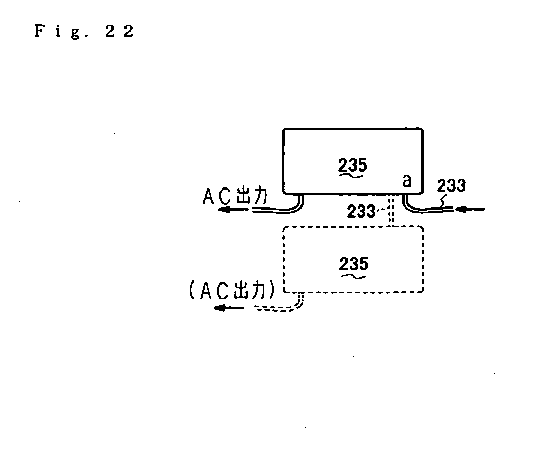

Fig. 22 is a partial macrograph of the above.

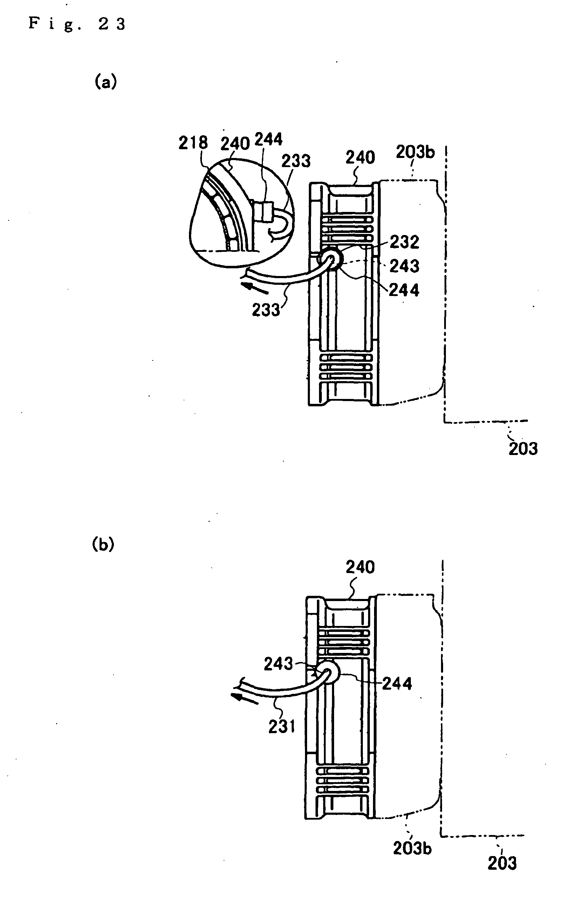

Fig. 23(a) is a side view of a casing of the electric power generator, having a wire-extraction part with a connector, in the propelling machine of the first embodiment.
Fig. 23(b) is a side view of a casing of the electric power generator, having a wire-extraction part, in the propelling machine of the first embodiment.

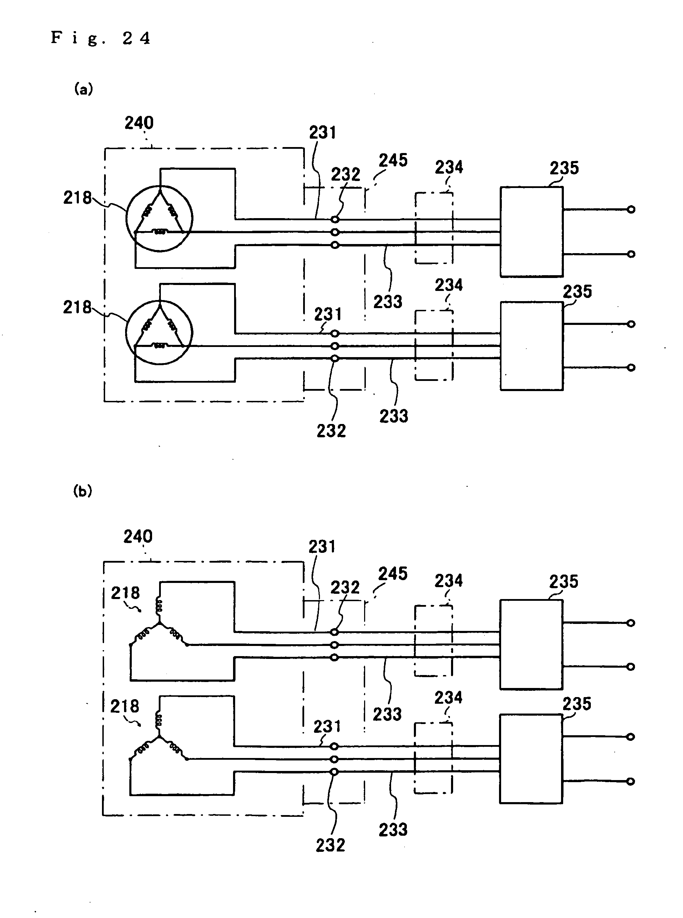

Fig. 24(a) is a circuit diagram of another electric power output route using a delta connection.
Fig. 24(b) is a circuit diagram of another electric power output route using a Y connection.

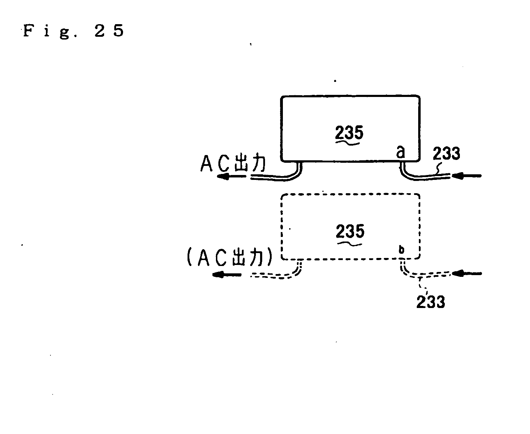

Fig. 25 is a partial macrograph of the above.

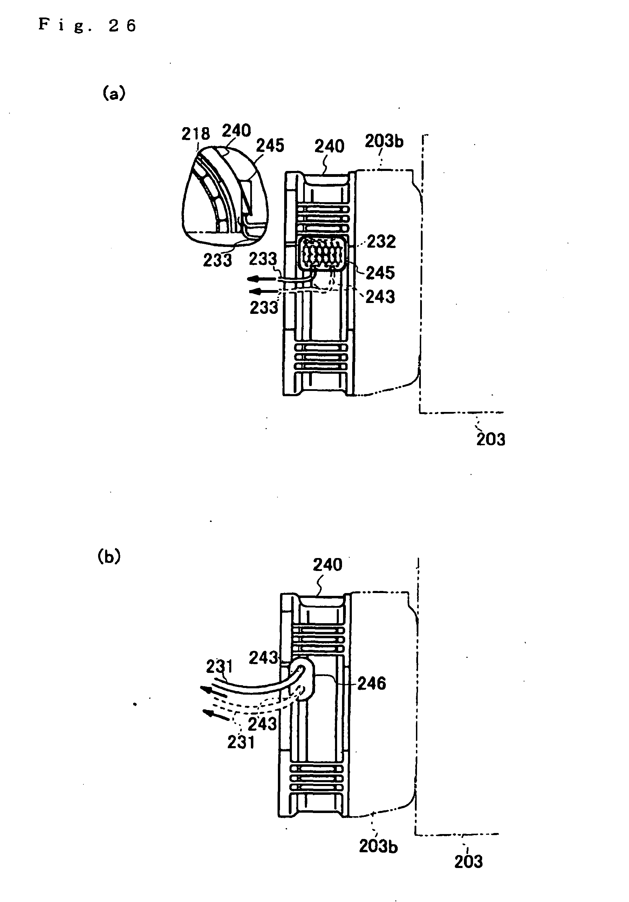

Fig. 26(a) is a side view of a casing of the electric power generator, having another wire-extraction part with a connector, in the propelling machine of the first embodiment.
Fig. 26(b) is a side view of a casing of the electric power generator, having another wire extraction part, in the propelling machine of the first embodiment.

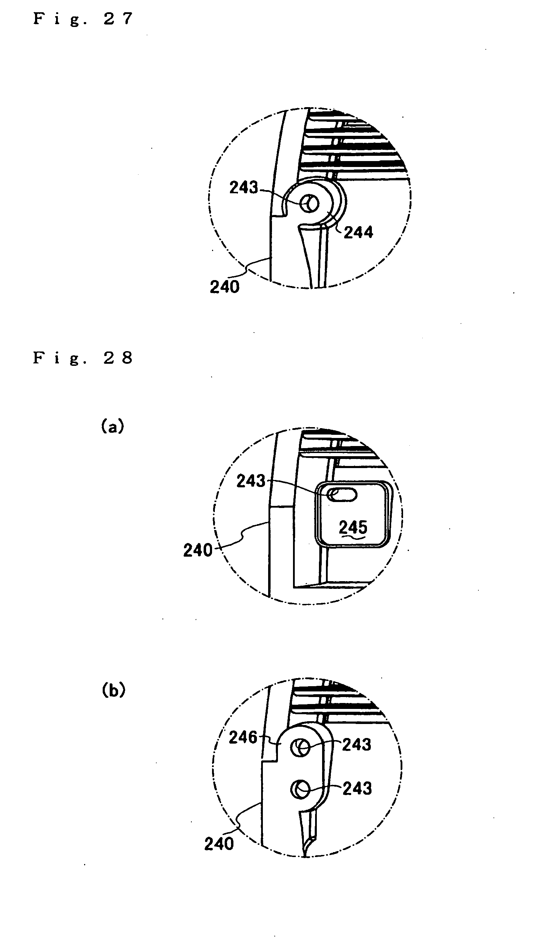

Fig. 27 is a macrograph of a wire-extraction part in the propelling machine of the first embodiment.
Fig. 28 is a macrograph of another wire extraction part in the propelling machine of the first embodiment.

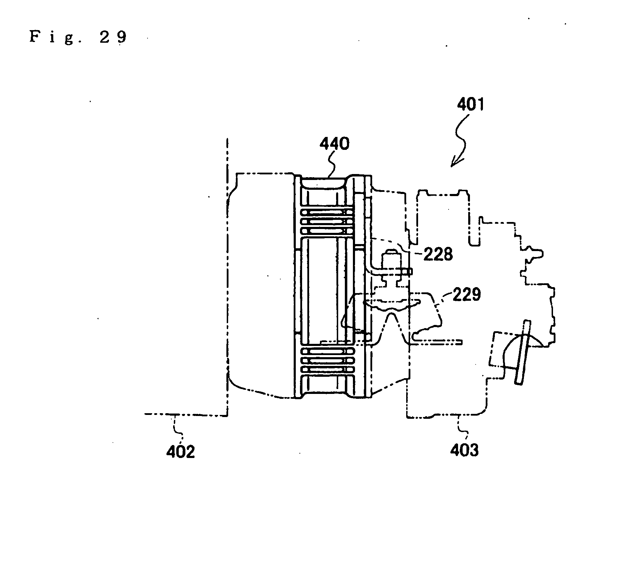

Fig. 29 is a side view of a (angle-type) marine-gear propelling machine according to the first embodiment.

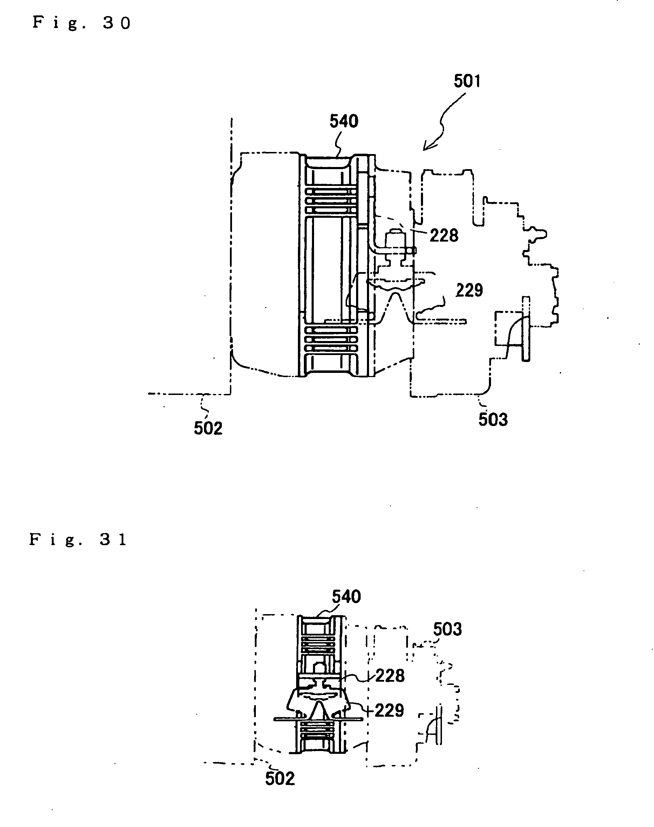

Fig. 30 is a side view of a (parallel-type) marine-gear propelling machine according to the first embodiment.
Fig. 31 is a side view of a (parallel-type) marine-gear propelling machine according to the first embodiment, provided with another casing of the electric power generator.

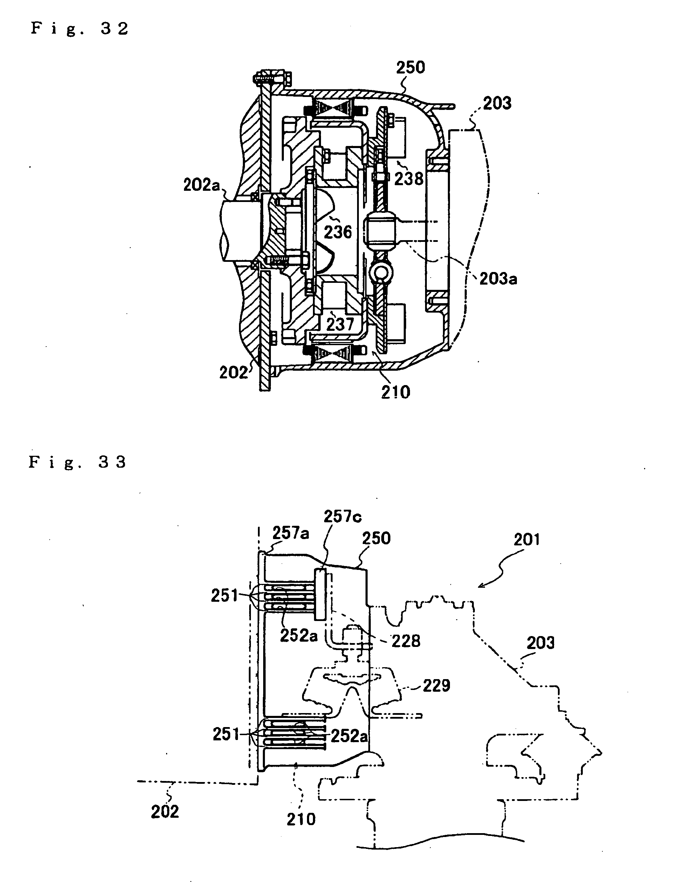

Fig. 32 is a sectional side view of a propelling machine according to a second embodiment.
Fig. 33 is a side view of the propelling machine.

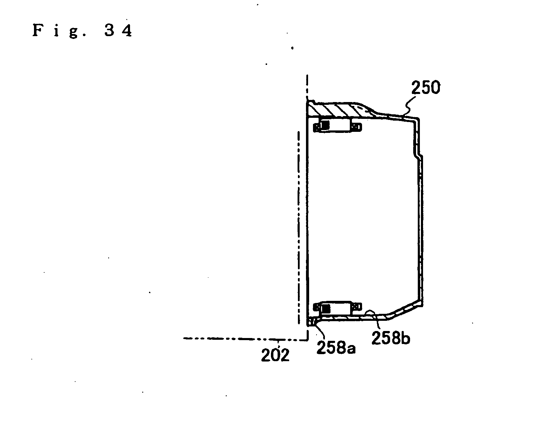

Fig. 34 is a side view of a casing of an electric power generator, having drain holes, in the propelling machine of the second embodiment.

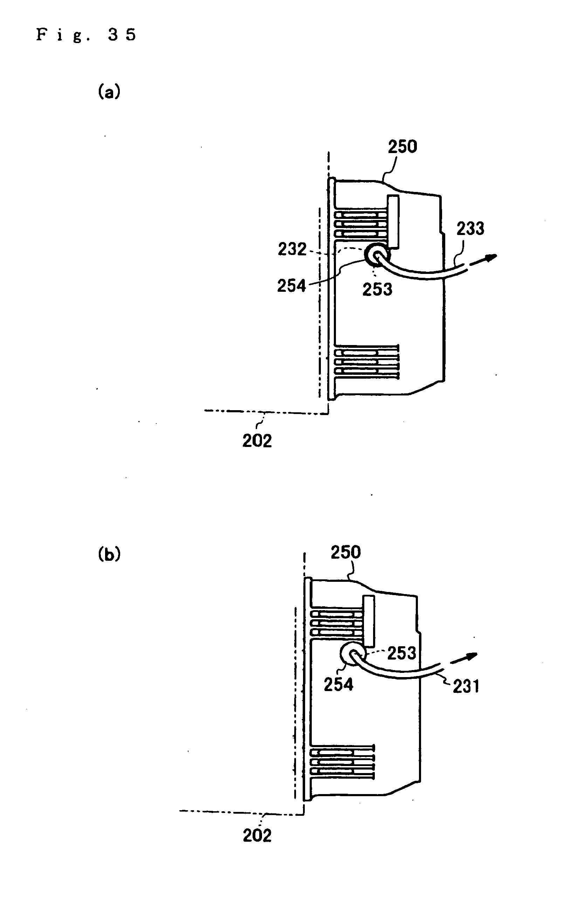

Fig. 35(a) is a side view of a casing of the electric power generator, having a wire-extraction part with a connector, in the propelling machine of the second embodiment.
Fig. 35(b) is a side view of a casing of the electric power generator, having a wire extraction part, in the propelling machine of the second embodiment.

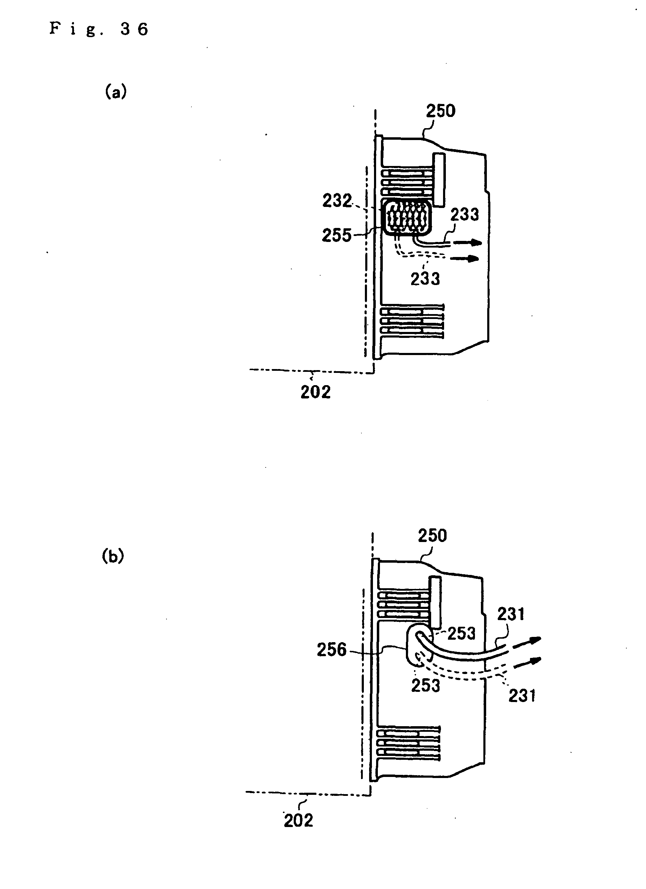

Fig. 36(a) is a side view of a casing of the electric power generator, having another wire-extraction part with a connector, in the propelling machine of the second embodiment.
Fig. 36(b) is a side view of a casing of the electric power generator, having another wire extraction part, in the propelling machine of the second embodiment.

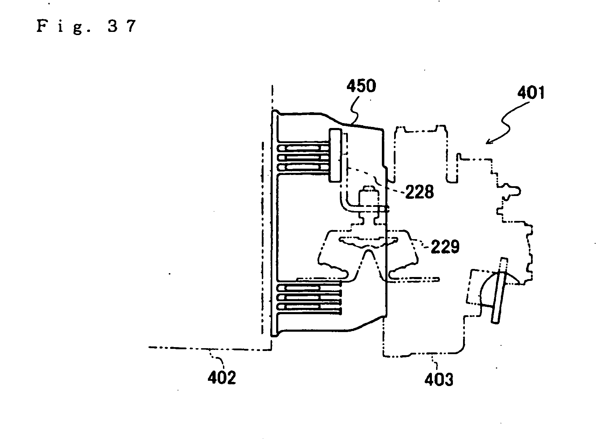

Fig. 37 is a side view of a (angle-type) marine-gear propelling machine according to the second embodiment.

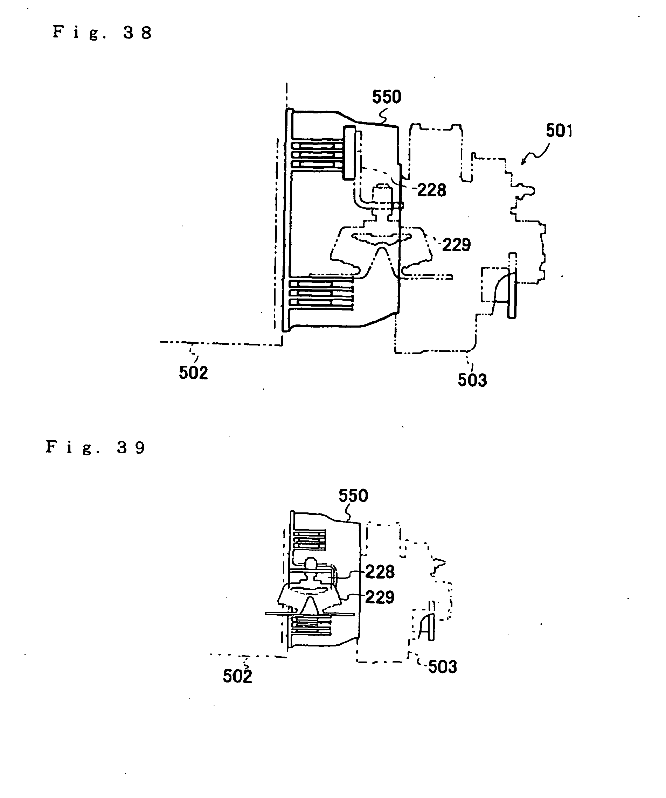

Fig. 38 is a side view of a (parallel-type) marine-gear propelling machine according to the second embodiment.
Fig. 39 is a side view of a (parallel-type) marine-gear propelling machine according to the second embodiment.

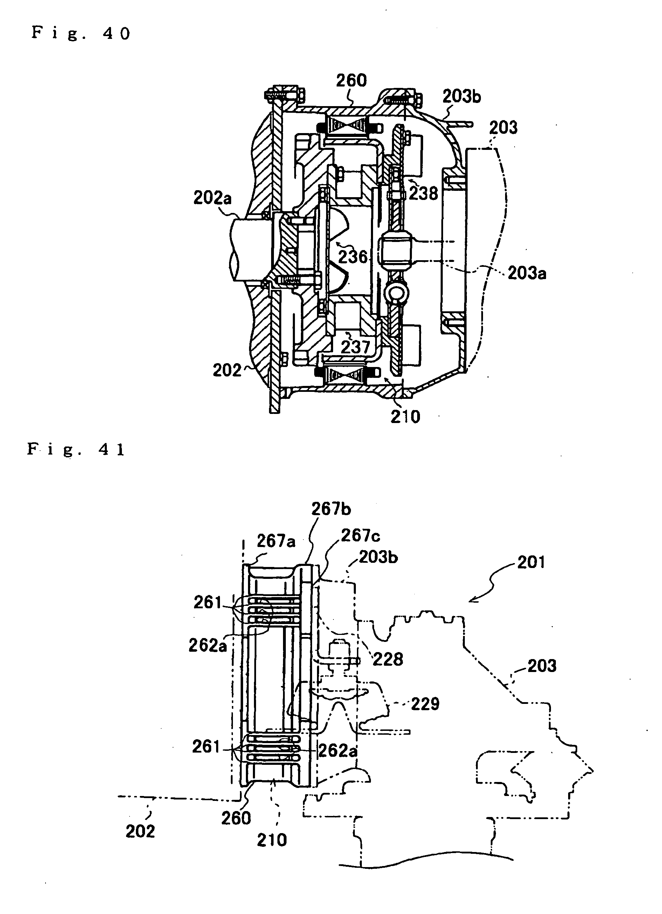

Fig. 40 is a sectional side view of a propelling machine of a third embodiment.
Fig. 41 is a side view of the propelling machine.

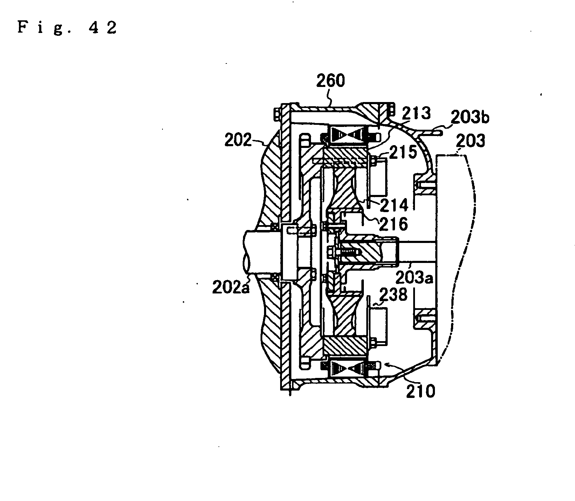

Fig. 42 is a sectional side view of the propelling machine of the third embodiment, having another electric power generator.

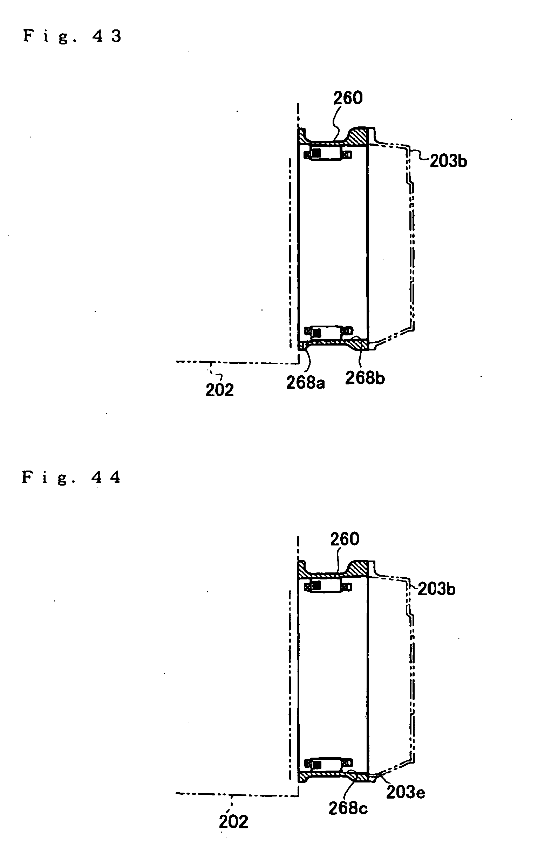

Fig. 43 is a side view of a casing of the electric power generator, having a drain hole, in the propelling machine of the third embodiment.
Fig. 44 is a side view of a casing of the electric power generator, having another drain hole, in the propelling machine of the third embodiment.

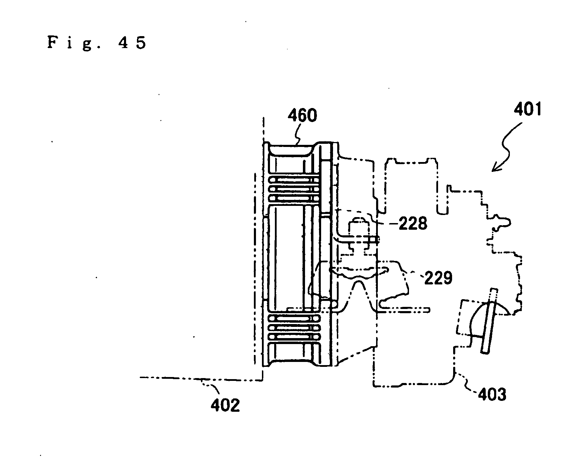

Fig. 45 is a side view of a (angle-type) marine-gear propelling machine according to the third embodiment.

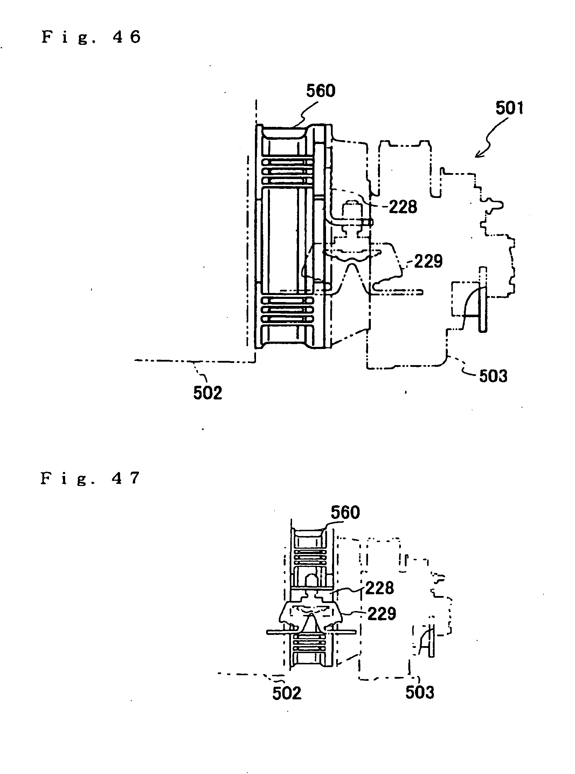

Fig. 46 is a side view of a (parallel-type) marine-gear propelling machine according to the third embodiment.
Fig. 47 is a side view of a (parallel-type) marine-gear propelling machine according to the third embodiment, having another casing of the electric power generator.

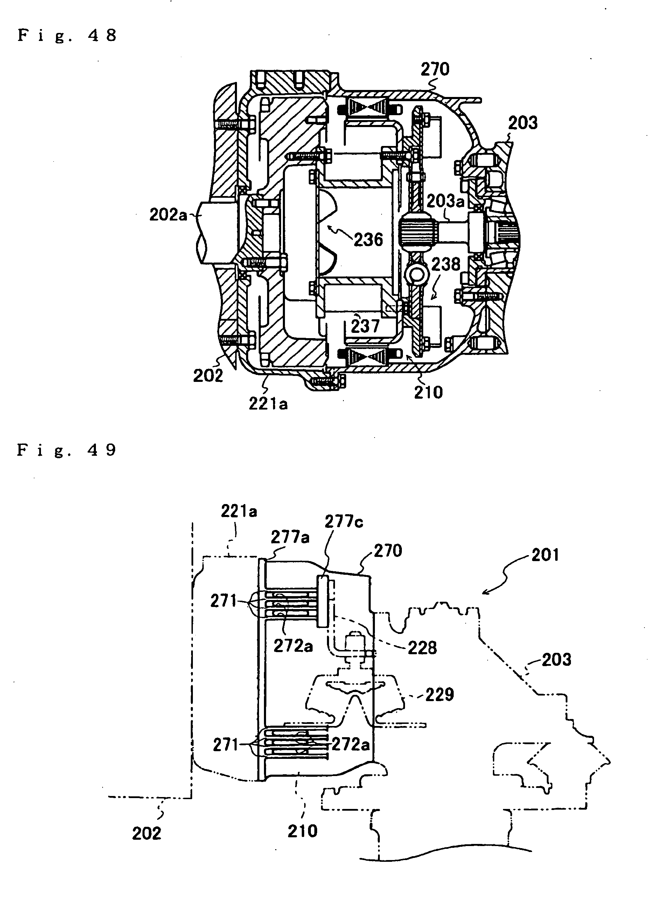

Fig. 48 is a sectional side view of a propelling machine according to a fourth embodiment.
Fig. 49 is a side view of the propelling machine.

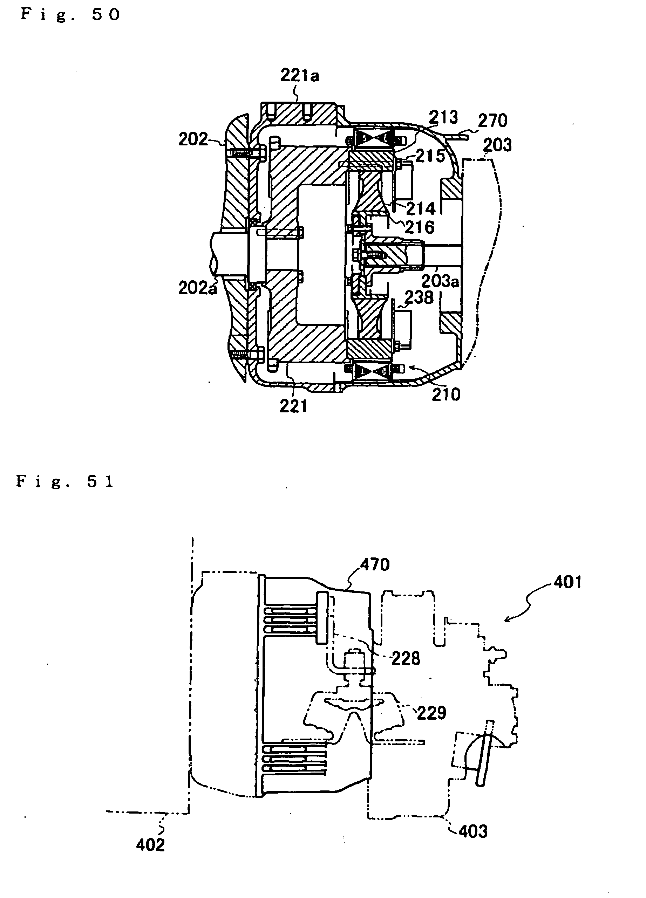

Fig. 50 is a sectional side view of the propelling machine according to the fourth embodiment, having another electric power generator.
Fig. 51 is a side view of a (angle-type) marine-gear propelling machine according to the fourth embodiment.

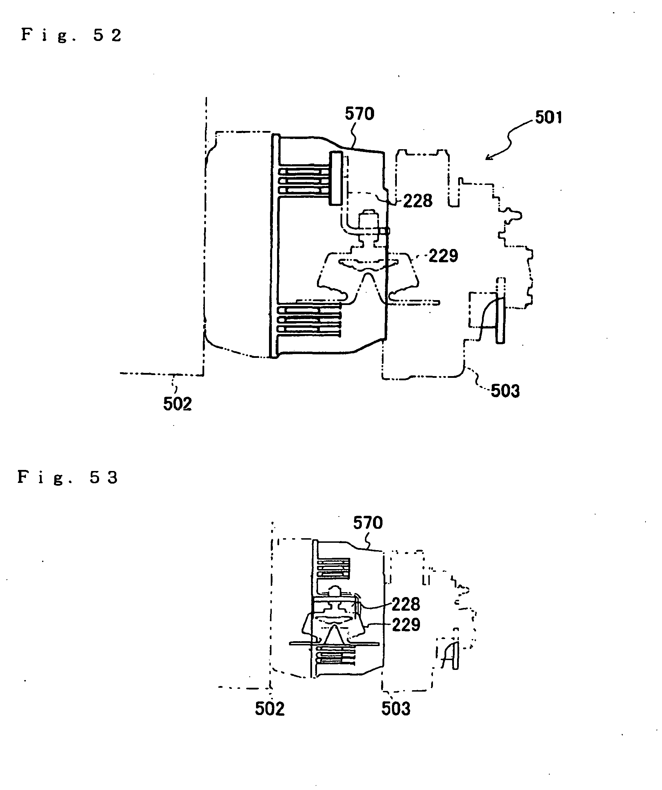

Fig. 52 is a side view of a (parallel-type) marine-gear propelling machine according to the fourth embodiment.
Fig. 53 is a side view of a (parallel-type) marine-gear propelling machine according to the fourth embodiment, having another casing of the electric power generator.

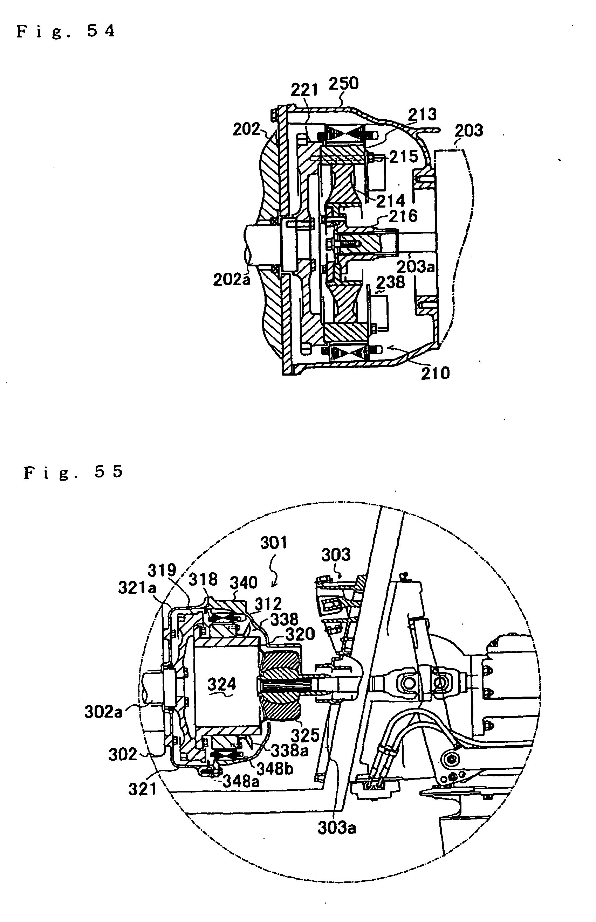

Fig. 54 is a sectional side view of a reshaped propelling machine according to the second embodiment.
Fig. 55 is a schematic side view of a stern-drive propelling machine.

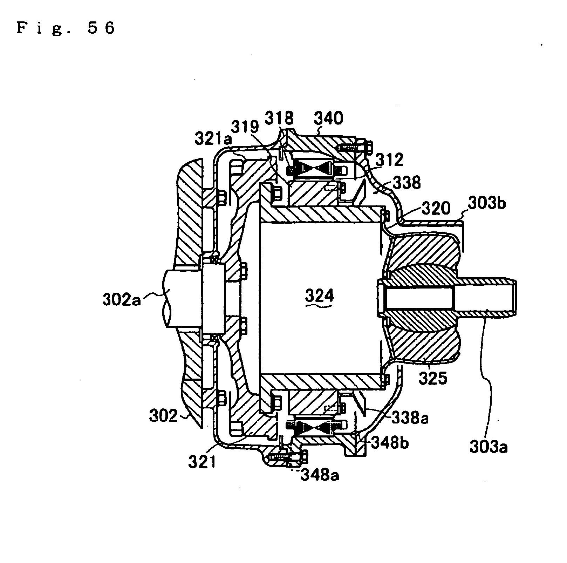

Fig. 56 is a sectional side view of a stern-drive propelling machine according to a first embodiment.

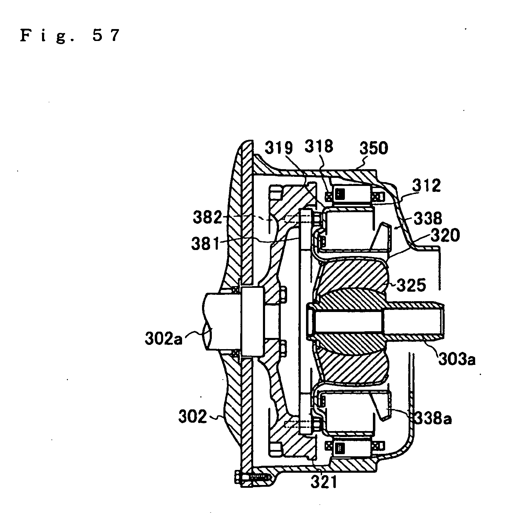

Fig. 57 is a sectional side view of another electric power generator in the stern-drive propelling machine.

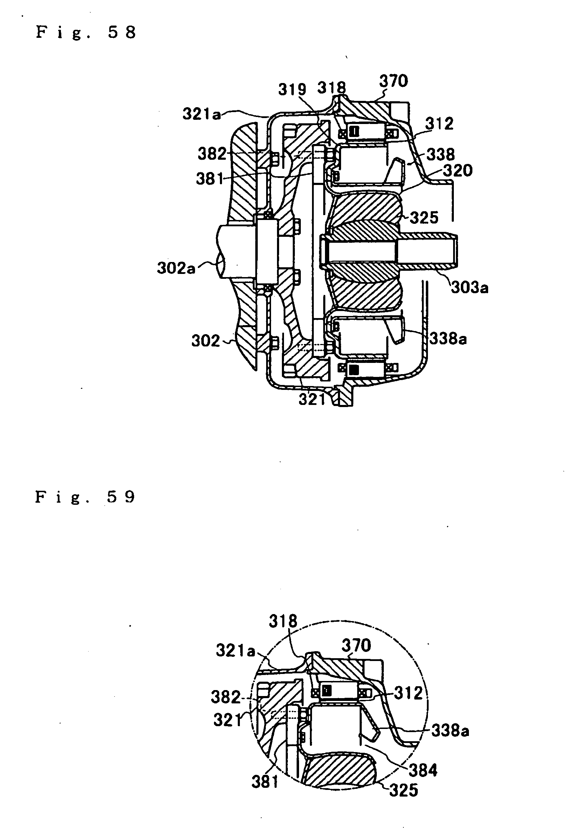

Fig. 58 is a sectional side view of another electric power generator in the stern-drive propelling machine according to the first embodiment.
Fig. 59 is a partial macrograph of the electric power generator having an integrated attaching member.

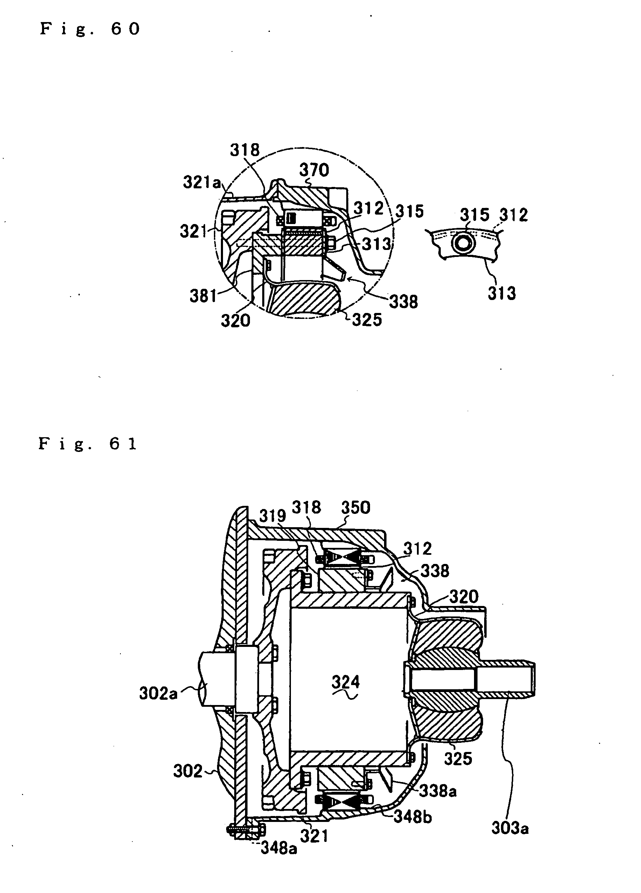

Fig. 60 is a partial macrograph of another electric power generator.
Fig. 61 is a sectional side view of a stern-drive propelling machine according to a second embodiment.

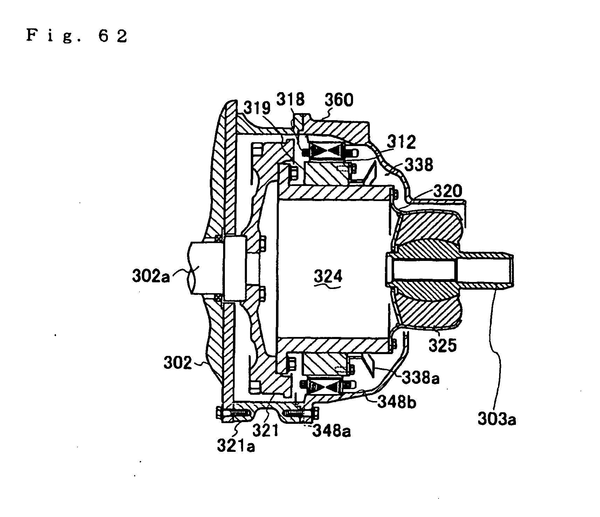

Fig. 62 is a sectional side view of a stern-drive propelling machine according to a third embodiment.

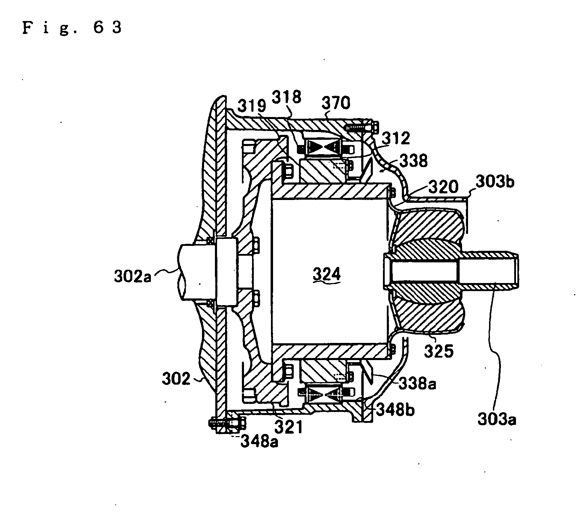

Fig. 63 is a sectional side view of a stern-drive propelling machine according to a fourth embodiment.

### Best Mode for Carrying out the Invention

Explanation will be given of a vessel-propelling machine.

As shown in Fig. 1, a vessel-propelling machine 201 comprises an internal combustion engine 202 and a transmission 203. A propeller 204 is connected to the transmission 203. The transmission 203 decelerates and transmits the driving force from the engine 202 to the propeller 204 so as to drive the propeller 204.

With regard to the propelling machine 201, an electric power generator 210, which is a dynamo or another device having such function, is disposed between the engine 202 and the transmission 203. The generator 210 is driven by the internal combustion engine 202 so as to generate electric power supplied to inboard equipments.

Referring to Fig. 1, a sail-drive propelling machine 201 serving as one type of the vessel-propelling machines includes the transmission 203 extended largely below the engine 202 and the propeller 204 is directly attached to the transmission 203. Referring to Fig. 2, a stern-drive propelling machine 301 serving as another type vessel-propelling machine includes a transmission 303, which is disposed behind a vessel and directly attached to a propeller 304 and receives power of an internal combustion engine 302 with an electric power generator 310 through a power take-off shaft 303a.

Referring to Fig. 3, a (angle type) marine-gear propelling machine 401 serving as another type vessel-propelling machine includes a transmission 403 from which a propeller shaft 404a with a propeller 404 is extended downwardly backward. Referring to Fig. 4, a (parallel type) marine-gear propelling machine 501 serving as another type vessel-propelling machine has a transmission 503 from which a horizontal propeller shaft 504a with a propeller 504 is extended backward.

A sail-drive propelling machine 201 according to a first embodiment will now be described.

As shown in Figs. 5 and 6, a flywheel 221 is disposed on one end of a crankshaft 202a of the internal combustion engine 202 so as to be rotated by the crankshaft 202a serving as an output shaft of the engine 202. The flywheel 221 is covered with a flywheel housing (hereinafter referred to as "FW housing") 221 a.

A generator casing 240 is attached to the rear portion of the FW housing 221a. Components of the generator 210 are built in the generator casing 240. Specifically, stator coils 218 are attached onto the inner peripheral surface of the generator casing 240 and a magnet 212 is arranged radially inward of the stator coils 218 (toward the center). The magnet 212 is fixed to a distance piece 224, which is a rotary member, through a cylindrical attachment member 219. The magnet 212, the attachment member 219, and a flange part 224b of the distance piece 224 function as a rotor. The distance piece 224 is fixed to the flywheel 221 so that the magnet 212 can be rotated integrally with the distance piece 224 and the flywheel 221.

The stator coils 218 are fixed on the inner peripheral surface of the generator casing 240 by bolts 207 so as to be arranged circlewise inside the generator casing 240.

The magnet 212 is attached to the distance piece 224 through the attachment member 219 so as to be arranged radially inward of the stator coils 218.

The distance piece 224 is formed as a cylindrical hollow shaft, and flange parts 224a and 224b are integrally formed at the front and rear ends of the distance piece 224, respectively.

The front flange part 224a disposed at the front end of the distance piece 224 is attached to the flywheel 221 so that the distance piece 224 can be rotated integrally with the flywheel 221.

The attachment member 219 is fixed to the rear flange part 224b disposed on a side opposite to the flywheel 221. The magnet 212 is fixed to the distance piece 224 through the attachment member 219. The cylindrical attachment member 219 is provided with the magnet 212 on its outer peripheral surface.

A mounting flange 203b of the transmission 203 can be attached to the generator casing 240 on the side opposite to the FW housing 221a. The mounting flange 203b, serving as a part of the casing of the generator, is attached to the generator casing 240 so as to fix the transmission 203 to the engine 202.

The crankshaft 202a of the engine 202 also serves as a rotary shaft of the generator 210, and the crankshaft 202a is arranged coaxially to an input shaft 203a of the transmission 203. Consequently, the rotary shaft of the generator 210 is disposed coaxially with the crankshaft 202a and the input shaft 203a. When the mounting flange 203b is attached to the generator casing 240, the input shaft 203a comes to be connected to the flywheel 221 through an elastic joint 225 so as to be rotated by the crankshaft 202a. The transmission 203 decelerates and transmits the driving force from the input shaft 203a to the propeller 204 (shown in Fig. 1), thereby rotating the propeller 204.

Cooling fans are provided to the generator 210.

As shown in Fig. 8, fans 236, 237 and 238 are arranged at the front end, the outer peripheral surface and the back of the distance piece 224, respectively. The fans, which are provided at three positions in the present embodiment, may be alternatively provided at one or two optionally selected positions.

The first fan 236 is attached to the front end of the distance piece 224 (toward the flywheel).

The front flange part 224a of the distance piece 224 is formed with an attachment part 224d onto which the fan 236 is attached. The attachment part 224d is an annular groove formed at the front end of the distance piece 224, into which the fan 236 can be fitted. Vanes 236a of the fan 236 are arranged inside the distance piece 224. The fan 236 is rotated integrally with the distance piece 224 so as to enhance the efficiency of cooling the generator 210.

The second fan 237 is provided on the outer peripheral surface of the distance piece 224.

Vanes 237a are projected outward from the outer peripheral surface of the distance piece 224, thereby constituting the fan 237. The front end of the fan 237 is fixed to the rear surface of the front flange part 224a, and the rear end of the fan 237 is fixed to the front surface of the rear flange part 224b. Alternatively, the fan 237 may be formed integrally with the front flange part 224a and the rear flange part 224b.

The third fan 238 is arranged behind the distance piece 224.

The third fan 238 is fastened through a fixture member 220 to the distance piece 224 together with the attachment member 219 having the fixed magnet 212. The third fan 238 is arranged on the rear surface of the fixture member 220 and fixed to the distance piece 224 by bolts. Vanes 238a of the fan 238 are arranged behind the generator 210. Therefore, the fixture member 220 and the third fan 238 are rotated integrally with the distance piece 224 so as to enhance the efficiency of cooling the generator 210.

Accordingly, the cooling fans are disposed within the generator casing 240 so that air flows inside the generator casing 240 as arrows drawn in Fig. 8 so as to ensure high cooling efficiency.

An alternative power generator according to another embodiment will be described.

The alternative electric power generator 210 is provided with a rotary member using an elastic member and a flange. As shown in Fig. 9, the generator casing 240 is attached to the rear part of the FW housing 221a, and component members of the generator 210 are built in the generator casing 240.

The stator coils 218 are attached to the inner peripheral surface of the generator casing 240, and the magnet 212 is disposed radially inward of the stator coils 218 (toward the center). The magnet 212 is fixed onto an outer ring 213 fixed to the flywheel 221. An elastic member 214 is fixed to a flange 216. The outer ring 213, the elastic member 214 and the flange 216 are integrally rotatable. The elastic member 214 is ring-shaped in sectional rear view and has reentrants 214a along its outer periphery.

The elastic member 214 is integrally formed with an I-like shaped part in sectional side view fixed onto the flange 216. The flange 216 is connected to the input shaft 203a of the transmission 203.

The outer ring 213 is formed with boltholes 213a disposed in the fore-and-aft direction. Bolts 215 are passed through the respective boltholes 213a and screwed into the flywheel 221 so as to fix the flywheel 221 to the outer ring 213. Therefore, the flywheel 221 rotates the magnet 212 through the outer ring 213, the elastic body 214 and the flange 216, and is connected to the input shaft 203a so as to drive the input shaft 203a by the crankshaft 202a. The transmission 203 decelerates and transmits the driving force from the input shaft 203a to the propeller 204 (shown in Fig. 1), thereby driving the propeller 204.

The third fan 238 disposed behind the outer ring 213 is fixed to the outer ring 213 by the bolts 215 fixing the outer ring 213 to the flywheel 221.

Due to the fan 238 for cooling the generator 210, the efficiency of cooling the interior of the generator casing 240 is improved. Furthermore, the bolts 215 fixing the outer ring 213 to the flywheel 221 are also used for fixing the fan 238 to the outer ring 213, thereby reducing the number of bolts.

The remains are constructed substantially similar to those of the above-mentioned generator.

Alternatively, as shown in Fig. 10, a flange 208 may be fixed onto the input shaft 203 a of the transmission 203 and a plurality of elastic members 209 may project radially from the outer peripheral surface of the flange 208.

The elastic member 214 with the flange 216 serving as a rotary member prevents the transmission 203 from vibration when transmitting driving force from the engine 202 to the transmission 203, thereby reducing noise caused by gears in the transmission 203.

The generator casing 240 of the propelling machine 201 will be described.

As shown in Figs. 6 and 7, the generator casing 240 is cylindrical, and the stator coils 218 are attached onto the inner side of the generator casing 240 through the bolts 207.

A front flange part 247a and a rear flange part 247b project (in all radial directions) outward from the front and rear portions of the generator casing 240 so as to serve as parts of the generator casing 240 to be fixed to the FW housing 221a and the mounting flange 203b, respectively.

Fins 241 or ribs are provided on the outer peripheral surface of the generator casing 240 and arranged substantially in parallel to the crankshaft 202a. Holes 242a are provided under the fins 241 or the ribs on the outer peripheral surface of the generator casing 240, and arranged substantially in parallel to the fins 241 or ribs.

With regard to the present embodiment, as shown in Figs. 6 and 7, the fins 241 are formed on the outer peripheral surface of the generator casing 240.

The fins 241 project substantially horizontally outward from the outer peripheral surface of the generator casing 240. When viewed in rear, four portions, i.e., upper left, lower left, upper right and lower right portions are provided on the generator casing 240, and four fins 241 are formed on each of the four portions.

The fins 241 are fixed at front ends thereof to the rear surface of the front flange part 247a, and fixed at rear ends thereof to the front surface of the rear flange part 247b. Alternatively, the fins 241 may be formed integrally with the front flange part 247a and the rear flange part 247b.

The fins 241 or ribs provide on the outer peripheral surface of the generator casing 240 can radiate heat from the generator casing 240 nearest to the generator 210 so as to enhance the cooling efficiency. The fins 241 on the generator casing 240 also reinforce the generator casing 240.

The holes 242a are formed on the generator casing 240 under the respective fins 241. The holes 242a are longitudinally elongated, and kept substantially flat or directed rather downward. Namely, the holes 242a are provided between the fins 241 and under the lowest fin 241.

Similar to the fins 241, four holes 242a are formed on each of the four portions, i.e., the upper left, lower left, upper right and lower right portions of the generator casing 240, which appear fully when viewed in rear.

Reentrants 242b are partially formed on the inner peripheral surface of the generator casing 240 incorporating the stator coils 218 so as to pass air therethrough between front and rear chambers in the generator casing 240 divided by the stator coils 218. The reentrants 242b are arranged near the holes 242a. More specifically, the reentrants 242b are distributed to the four portions, i.e., the upper left, lower left, upper right and lower right portions of the generator casing 240, which appear fully when viewed in rear, so as to be connected to the holes 242a. In spite of the stator coils 240, the reentrants 242b formed on the inner peripheral surface of the generator casing 240 let air flow freely in the generator casing 240. Furthermore, the reentrants 242b make gaps between the stator coils 218 and the generator casing 240, so that air in the generator casing 240 can be sent to the outside thereof and the outside air can be sent into the generator casing 240 through the gaps and the holes 242a, thereby enhancing the cooling efficiency.

For example, when the distance piece 224 is rotated counterclockwise in rear view as shown in Fig. 6(a), the open air is inhaled into the generator casing 240 through the gaps at the upper right and lower left portions of the generator casing 240, and discharged from the gaps at the upper left and lower right portions of the generator casing 240, as drawn by arrows. When the distance piece 224 is rotated clockwise in rear view, the open air is inhaled into the generator casing 240 through the gaps at the upper left and lower right portions of the generator casing 240, and discharged from the gaps at the upper right and lower left portions of the generator casing 240.

The holes 242a on the outer peripheral surface of the generator casing 240 further enhances the efficiency of cooling the electric power generator therein. The fins 241 prevent vertically dropping water from entering the holes 242a disposed just thereunder.. Furthermore, the holes 242a disposed substantially in parallel to the fins 241 are also substantially in parallel to the crankshaft 202a, thereby improving circulation of the cooling air so as to ensure high cooling efficiency.

The front flange part 247a coincides in dimension or shape with an input side attachment part 203d of the mounting flange 203b. The rear flange part 247b coincides in dimension or shape with an output side attachment part 221b of the FW housing 221a.

Namely, the end face of the output side attachment part 221b of the FW housing 221a and the end surface of the front flange part 247a of the generator casing 240 are substantially similarly shaped so as to fit each other to be joined. The end face of the rear flange part 247b of the generator casing 240 and the end surface of the input side attachment part 203d of the mounting flange 203b are substantially similarly shaped so as to fit each other to be joined. The output side attachment part 221b of the FW housing 221 a and the input side attachment part 203d of the mounting flange 203b can be joined to each other without the generator 210.

Therefore, whether the generator 210 is provided or not, the same mounting flange 203b and FW housing 221a can be used without modification, thereby reducing the number of parts.

Moreover, due to this construction, tandem generators 210 corresponding to a use requiring a large electric output power can be disposed without increasing parts.

The propelling machine 201 having the tandem generators 210 will now be described.

As shown in Fig. 11, two generators 210U and 210D are disposed between the internal combustion engine 202 and the transmission 203.

A distance piece 224U of the upstream generator 210U is fixed to the flywheel 221, and a distance piece 224D of the downstream generator 210D is fixed to the distance piece 224U.

The downstream distance piece 224D is fixed to the upstream distance piece 224U by bolts 226 for fastening a magnet rotor 212U to the upstream distance piece 224U without requiring additional parts, thereby saving the number of parts.

The downstream distance piece 224D is connected to the input shaft 203a of transmission 203 through the elastic joint 225. Power from the flywheel 221 is transferred to the distance pieces 224U and 224D so as to generate electric power, and transferred to the transmission 203 through the distance pieces 224U and 224D.

The generators 210U and 210D are enclosed in the generator casings 240U and 240D, respectively.

A front flange part 247aU of the upstream generator casing 240U is fixed to the output side attachment part 221b of FW housing 221a, and a rear flange part 247bU thereof to a front flange part 247aD of the downstream generator casing 240D. A rear flange part 247bD of the downstream generator casing 240D is fixed to the input side attachment part 203d of mounting flange 203b. Consequently, the engine 202, the generators 210U and 210D, and the transmission 203 are integrally fitted together.

The front flange part 247a coincides in dimension and shape with the input side attachment part 203d of mounting flange 203b, and the rear flange part 247b with the output side attachment part 221b of FW housing 221a.

Accordingly, even if a plurality of tandem generators are interposed, the same generator casings 240, mounting flange 203b and FW housing 221a can be used, thereby saving the number of parts.

In this way, a plurality of tandem electric power generators can be easily detachably disposed between the internal combustion engine and the transmission without increasing parts or changing the specification.

A drain hole 248a is provided at a lower portion of the generator casing 240.

As shown in Figs. 8, 12 and 13, the generator casing 240 is made by casting, and its inside is sloped for drafting a core. The drain hole 248a is provided at the lower side of this slope 248b in the bottom portion of the generator casing 240.

With regard to the present embodiment, the slope 248b is so made that the front side of generator casing 240 (toward the engine) is open wider than the rear side thereof (toward the transmission). Therefore, the drain hole 248a is formed vertically through the front lower portion of the generator casing 240.

The drain hole 248a formed through the lower portion of generator casing 240 can drain water caused by dew condensation or another reason from the inside of the generator casing 240. The slope 248b remaining after drafting a core is used for letting water flow more efficiently.

Alternatively, a hole 203e (shown in Figs. 5, 14 and 15) may be formed within the mounting flange 203b so as to drain water caused by dew condensation or the like in the generator casing 240.

The generator casing 240 shown in Figs. 5, 14 and 15 has a slope 248c such as to make the rear side of generator casing 240 (toward the transmission) open wider than the rear side thereof (toward the engine). Namely, the slope 248a in the bottom portion of generator casing 204 is lowered toward the mounting flange 203b.

The drain hole 203e is formed within the bottom portion of mounting flange 203b arranged on the lower side of the bottom portion of generator casing 240. The drain hole 203e is formed along the slope 248c of the generator casing 240 in the fore-and-aft direction of the mounting flange 203b.

The undersurface of the drain hole 203e is positioned lower than the slope 248c of the generator casing 240.

Due to this construction, water collected inside the generator casing 240 by dew condensation or another reason can be drained. The slope 248b or 248c formed for drafting a casting core can be effectively utilized for draining water.

An arrangement of mounting the propelling machine onto a vessel body will be described in accordance with Figs. 6, 16 to 20.

Mounting legs 228 for mounting the propelling machine 201 onto a vessel body are attached onto the outer peripheral surface of the generator casing 240. In another way, attachment portions, to which mounting legs 228 for mounting the propelling machine 201 onto a vessel body are attached, are formed on the outer peripheral surface of the generator casing 240.

In this way, to mount the propelling machine 201 onto a vessel body, the mounting legs 228 are attached to the generator casing240 as well as a mounting leg attached to the internal combustion engine 202 or the transmission 203.

An arrangement of the mounting legs 228 attached to the generator casing 240 will be described.

As shown in Figs. 6, 16 and 17, two attachment stays 247c are formed at left and right upper portions of the rear flange part 247b, and the mounting legs 228 are attached onto the respective attachment stays 247c. The mounting legs 228 are disposed between a vibration proof member 229 provided in a vessel body and the propelling machine 201 so as to mount the propelling machine 201 onto the vessel body.

The attachment stays 247c are positioned behind the fins 241 and the holes 242a arranged at the right and left upper portions of the generator casing 240.

The plate-shaped attachment stays 247c integrally project laterally outward from the outer peripheral surface of the rear flange part 247b.

Two holes 247d are formed in each of the left and right attachment stays 247c. Bolts 227 are fastened with the mounting legs 228 into the holes 247d.

Each of the mounting legs 228 is L-like shaped when viewed in side, and includes a vertical part 228a and a horizontal part 228b. The holes 228c are formed in the vertical part 228a. The vibration proof member 229 is attached to the horizontal part 228b. The mounting legs 228 are arranged to coincide their holes 228c with the respective holes 247d, and the bolts 227 are screwed into the holes, so that the mounting legs 228 are fixed at their vertical parts 228a to the generator casing 240. The horizontal parts 228b are fixed to the vibration proof members 229, whereby the generator casing 240 is fixed through the mounting legs 228 onto the vessel body.

In this way, the mounting legs 228 can be attached to the generator casing 240 in addition to the mounting legs, which are provided on the engine 202 or the transmission 203 to be used when the electric power generator is not mounted. Therefore, some methods for mounting the propelling machine onto a vessel body are prepared corresponding to various kinds of vessel. Any method can be selected corresponding to conditions of a target vessel (specification and structure of the engine or the vessel itself, etc.) so that the propelling machine can be easily mounted onto the vessel. The propelling machine can be firmly settled by increasing mounting fixture parts.

An alternative arrangement of mounting the propelling machine onto a vessel body will be described in accordance with Figs. 18 to 20.

The generator casing 240 is formed with four holes 247e, which are open at the outer peripheral surface of the casing 240 so as to serve as portions to be attached to a vessel body, thereby facilitating attachment of mounting legs 228. The mounting legs 228 are disposed between the vibration proof members 229 and the propelling machine 201 so as to mount the propelling machine 201 onto a vessel body.

The generator casing 240 is provided with four lateral holes 247e, which are distributed by twos into the left and right side surfaces thereof. The two holes 247e on each of the left and right side surfaces of the generator casing 240 are aligned before and behind. The mounting legs 228 are fixed to the holes 247e by bolts.

Each of the mounting legs 228 is L-like shaped when viewed in front so as to include a vertical part 228a and a horizontal part 228b. The vertical part 228a has two holes 228c, and the horizontal part 228b is attached to the vibration proof member 229. The mounting legs 228 are arranged to coincide their holes 228c with the respective holes 247d, and the bolts 227 are screwed into the holes, so that the mounting legs 228 are fixed at their vertical parts 228a to the generator casing 240. The horizontal parts 228b are fixed to the vibration proof members 229, whereby the generator casing 240 is fixed through the mounting legs 228 onto the vessel body.

Similarly to the above-mentioned arrangement, the mounting legs 228 in this arrangement can be attached to the generator casing 240 in addition to the mounting legs, which are provided on the engine 202 or the transmission 203 to be used when the electric power generator is not mounted. Therefore, some methods for mounting the propelling machine onto a vessel body are prepared corresponding to various kinds of vessel. Any method can be selected corresponding to conditions of a target vessel so that the propelling machine can be easily mounted onto the vessel. The propelling machine can be firmly settled by increasing mounting fixture parts.

A construction for supplying electric power from the generator 210 to inboard equipments will be described.

Output electric power of the generator 210 is used for inboard equipments.

An output part of the generator 210 is constructed so as to be attached to an output terminal or an output cable. Referring to Fig. 21, an output cable 231 is connected to the output part of the generator 210.

The output cable 231 can be taken out from the generator casing 240.

Specifically, as shown in Figs. 21 and 23, a cylindrical wire extraction part 244 is provided on the outer peripheral surface of the generator casing 240. The wire extraction part 244 is arranged on a side portion of the generator casing 240 and projects outward from the outer peripheral side surface of the generator casing 240.

As shown in Fig. 27, a hole 243 for wiring is open at the center of the side surface of the wire extraction part 244 so as to let cables or the like pass therethrough. Accordingly, the output power of the generator 210 can be taken out from the generator casing 240.

With regard to an embodiment shown in Fig. 23(a), a connector 232 or a terminal stand is attached into the wire extraction part 244. The output cable 231 connected to the output part of the generator 210 is connected to the inside of the connector 232, and an outer cable 233 is connected to the outside of the connector 232, thereby taking out the output power of the generator 210 from the generator casing 240. Due to this construction, the outer cable 233 can be easily attached or detached to and from the connector 232, thereby being available for wiring work. In comparison with a construction such that a connector box is installed outside the generator 210, the output cable 231 can be shortened, and the output cable 231 can be decomposed integrally with the stator, thereby being available for maintenance.

With regard to an embodiment shown in Fig. 23(b), the wire extraction part 244 is formed with a central hole 243 through which the output cable 231 is simply passed, thereby being available for taking out the output power of the generator 210 from the generator casing 240, and for attachment work at the time of maintenance or the like.

As shown in Figs. 21 and 22, a rectifying and smoothing device 234, comprising diodes (or thyristors), condensers, and others, is connected to the outer cable 233. A three-phase alternating-current power is generated from the stator coils 218 by rotating the rotor, rectified and smoothed by the rectifying and smoothing device 234, and converted into direct current.

Then, a plurality of inverters 235 convert the output power, having been converted by the rectifying and smoothing device 234, into alternating current again, and supply it to the inboard equipments. Since voltage and frequency of the output are fluctuated by indeterminate rotational speed of the engine, the output is changed into direct current by the rectifying and smoothing device 234. Since direct current cannot be transformed, the output is changed into alternating current of desired frequency and transformed into desired voltage, and then, supplied to the inboard equipments.

With regard to the present embodiment, the rectifying and smoothing device 234 is arranged outside the generator casing 240. Alternatively, the rectifying and smoothing device 234 may be arranged inside the generator casing 240.

A DC/DC converter may be provided downstream of the rectifying and smoothing device 234 so as to transform the output power from the rectifying and smoothing device 234 to a desired voltage and supply it to the inverters 235.

The output converted by the rectifying and smoothing device 234 is connected to the plurality of inverters 235 in parallel.

As shown in Figs. 21 and 22, the output of the rectifying and smoothing device 234 is distributed between the two inverters 235.

The plurality of inverters to which the output of the generator 210 is branched in parallel may be different in output from one another. The inverter or inverters having output corresponding to load of the used electric equipments can be selectively connected to the output of generator so as to efficiently ensure the total required capacity of electric power, thereby saving costs for buying an expensive inverter having a large capacity.

Another construction for supplying electric power from the generator 210 to the inboard equipments will now be described.

The generator 210 is provided with two or more output parts to which respective output terminals or output cables are attached.

As shown in Fig. 24, output cables 231 are connected to two points in the output part of the generator 210. Namely, two sets of stator coils 218 are provided to one or two rotors, and they are provided with respective output terminals, or with respective output cables extended therefrom.

The output cables 231 can be taken out from the generator casing 240.

Specifically, as shown in Figs. 24 and 26, a wire extraction part 245 is provided on the outer peripheral surface of the generator casing 240. The wire extraction part 245 is arranged at a side portion of the generator casing 240 and projects outward from the outer peripheral surface of the generator casing 240.

Holes 243 for wiring are formed in the wire extraction part 245 so as to let respective cables or the like pass therethrough so as to facilitate for taking out the output power of the generator 210 from the generator casing 240.

Referring to Fig. 26(a), front and rear holes 243 are open at the bottom surface of the wire extraction part 245. Alternatively, referring to Figs. 26(b) and 28(b), upper and lower holes 243 may be open at the side surface of the wire extraction part 245. Further alternatively, as shown in Fig. 28(a), a fore-and-aft elongated hole 243 may be open at the upper end of the side surface of the wire extraction part 245. The length of the elongated hole 243 is large enough to let a plurality of cables pass therethrough.

With regard to an embodiment shown in Fig. 26(a), the wire extraction part 245 is rectangular when viewed in side, so as to incorporate the connector 232 or the terminal stand. The output cables 231 connected to the output part of the generator 210 are connected to the inside of the connector 232, and outer cables 233 are connected to the outside of the connector 232, thereby taking out the output power of the generator 210 from the generator casing 240. Due to this construction, the outer cables can be easily connected to the connector 232 so as to facilitate the wiring work.

With regard to a modification shown in Fig. 26(b), a wire extraction part 246 is elongated when viewed in side so as to have the upper and lower two holes 243 for wiring. The output cables 231 are passed through the respective holes 243 so as to easily take out the output power of the generator 210 from the generator casing 240, thereby facilitating assembling work for maintenance.

As shown in Figs. 24 and 25, each of outer cables 233 is connected to each of the rectifying and smoothing devices 234. Each of the rectifying and smoothing devices 234 rectifies and smoothens alternating-current power from the generator 210 and converts it into direct current.

Then, each of the two inverters 235 converts the output power from each of the rectifying and smoothing devices 234 into alternating current again, and supplies it to the inboard equipments.

Accordingly, the plurality of output cables 231 can be connected to the output part of the generator 210, and connected to the respective rectifying and smoothing devices 234 so as to convert the output currents from the generator 210 into direct currents. The direct currents having been converted by the respective rectifying and smoothing devices 234 are converted into alternating currents again by the respective inverters 235. Due to this construction, each of the inverters 235 may have small output (capacity). The number of divisional inverters 235 can correspond to load of the used electric equipments. The inverters 231 having different capacities can be combined. Thus, total required capacity of electric power can be ensured without an expensive inverter having large capacity, thereby saving costs.

In the present embodiment, the rectifying and smoothing devices 234 are arranged outside the generator casing 240. Alternatively, the rectifying and smoothing devices 234 may be arranged inside the generator casing 240.

DC/DC converters may be provided downstream of the respective rectifying and smoothing devices 234 so as to transform the output current from the respective rectifying and smoothing devices 234 to respective desired voltages and supply them to the respective inverters 235.

Each of the (angle type) marine-gear propelling machine 401 shown in Fig. 29 and the (parallel type) marine-gear propelling machine 501 shown in Figs. 30 and 31 has the construction and effect according to the first embodiment, which are the same as those of the sail-drive propelling machine 201 of the first embodiment.

Next, a sail-drive propelling machine 201 according to the second embodiment will be described.

In the propelling machine 201 of the second embodiment as shown in Figs. 32 and 33, a generator casing 250 is equal to the generator casing 240 of the first embodiment integrated with the FW housing 221a and the mounting flange 203b.

The other configuration of the propelling machine 201 according to the second embodiment, e.g., the form of cooling fans 236, 237 and 238, is substantially similar to that of the propelling machine 201 according to the first embodiment. An electric power generator used in this embodiment, shown in Fig. 54, is constructed substantially similar to the alternative generator used in the propelling machine 201 of the first embodiment.

The generator casing 250 used in the propelling machine 201 of the second embodiment will be described.

The generator casing 250 has a front flange part 257a which projects outward from the front portion thereof to serve as a part fitted to the internal combustion engine 202.

As shown in Fig. 33, fins 251 are formed on the outer peripheral surface of the generator casing 250.

The fins 251 project substantially horizontally outward from the outer peripheral surface of the generator casing 250. The generator casing 250 has four portions, i.e., upper left, lower left, upper right and lower right portions, which appear fully when viewed in rear, and each of the portions is provided thereon with four fins 251.

The front ends of the fins 251 are fixed to the rear surface of the front flange part 257a, and the rear ends thereof are positioned substantially at the longitudinal center part of the generator casing 250.

Holes 252a are provided under the respective fins 251 in the outer peripheral surface of the generator casing 250. The holes 252a are elongated in the fore-and-aft direction and are substantially flat or rather downwardly slant.

The plural (e.g., three) holes 252a are formed in each of the four portions, i.e., upper left, lower left, upper right and lower right portions, which appear fully when viewed in rear, of the generator casing 250.

As shown in Fig. 34, the generator casing 250 has a slope 258b and a bottom drain hole 258a, which are similar to those of the generator casing 240 of the first embodiment, and have the same effect as those of the generator casing 240.

An arrangement of mounting the propelling machine 201 of the second embodiment onto a vessel body will be described in accordance with Fig. 33.

The front flange part 257a projecting outward from the front portion of the generator casing 250 serves as a part fitted to the internal combustion engine 202. Left and right upper attachment stays 257c are formed on the fore-and-aft center area of the generator casing 250. Mounting legs 228 attached to a vessel body through the vibration proof members 229 are attached to the respective attachment stays 257c so as to mount the propelling machine 201 onto the vessel body. Other parts in this arrangement of mounting the propelling machine 201 are similar to those in the arrangement of mounting the propelling machine 201 of the first embodiment.

An alternative arrangement of mounting the propelling machine 201 of this embodiment is similar to the alternative arrangement of mounting the propelling machine 201 for the first embodiment (shown in Figs. 18 to 20), and has the same effect.

An arrangement of supplying electric power to inboard equipments from the generator 210 in the propelling machine 201 of the second embodiment will be described.

A single output cable 231 takes out the output electric power of the generator 210 of the second embodiment, and a rectifying and smoothing device 234 converts the power into direct current. The changed direct current is branched and connected to a plurality of parallel inverters 235.

In the second embodiment, as shown in Fig. 35(a), on the generator casing 250 is formed a wire extraction part 254, which is similar to the wire extraction part 244 of the first embodiment. The wire extraction part 254 is provided with the output cable 231, a connector 232 and an outer cable 233 for taking out the output power of the generator 210 from the generator casing 250.

Alternatively, as shown in Fig. 35(b), the wire extraction part 254 may be formed with a central hole 253 through which the output cable 231 is passed so as to take out the output power of the generator 210 from the generator casing 250.

The others in the present arrangement are similar to those in the arrangement of supplying electric power to inboard equipments from the generator 210 of the first embodiment, and have the same effect.

An alternative arrangement of supplying power to the inboard equipments from the generator 210 of the propelling machine 201 of the second embodiment will be described.

A plurality of output cables 231 can be connected to the output part of the generator 210 of the second embodiment, and are connected to respective rectifying and smoothing devices 234 so as to convert the output currents of the generator 210 into direct currents. The inverters 235 convert the direct currents from the respective rectifying and smoothing devices 234 into alternating currents.

Referring to Fig. 36(a), on the generator casing 250 in the second embodiment is formed a wire extraction part 255, which is rectangular when viewed in side, similar to the corresponding wire extraction part 245 in the first embodiment, provided with the output cable 231, connectors 232 and outer cables 233 so as to take out the output power of the generator 210 from the casing 250.

Alternatively, referring to Fig. 36(b), on the generator casing 250 in the second embodiment is formed an elongated wire extraction part 256 as shown in side view, similar to the corresponding wire extraction part 246 in the fist embodiment, provided with two upper and lower holes 253 open at the side surface thereof. The output cables 231 are passed through the holes 253 so as to take out the output power of the generator 210 from the generator casing 250.

The others in the present arrangement are similar to those in the arrangement of supplying electric power to inboard equipments from the generator 210 of the first embodiment, and have the same effect.

According to the second embodiment, a generator casing 450 of the (angle type) marine-gear propelling machine 401 shown in Fig. 37 and a generator casing 550 of the (parallel type) marine-gear propelling machine 501 shown in Figs. 38 and 39 have the construction and effects, which are similar to those of the generator casing 250 of the sail drive propelling machine 201 of the second embodiment.

Next, the sail-drive propelling machine 201 according to a third embodiment will be described.

In the propelling machine 201 of the third embodiment as shown in Figs. 40 and 41, a generator casing 260 is equal to the generator casing 240 of the first embodiment integrated with the FW housing 221a.

The other configuration of the propelling machine 201 according to the third embodiment, e.g., the form of cooling fans 236, 237 and 238, is substantially similar to that of the propelling machine 201 according to the first embodiment. An alternative electric power generator shown in Fig. 42 used in this embodiment is constructed substantially similar to the alternative generator used in the propelling machine 201 of the first embodiment.

The generator casing 260 used in the propelling machine 201 of the third embodiment will now be described.

A front flange part 267a projects outward from the front portion of the generator casing 260 to serve as a part fitted to the internal combustion engine 202. A rear flange part 267b projects outward from the rear portion of the generator casing 260 to serve as a part fitted to the mounting flange 203b. Attachment stays 267c are provided on left and right upper portions of the rear flange part 267b, respectively. Mounting legs 228 attached to a vessel body through the vibration proof members 229 are attached to the respective attachment stays 267c so as to mount the propelling machine 201 onto the vessel body.

The other configuration of generator casing 260, e.g., form of fins 261 and holes 262a, is substantially similar to the corresponding configuration of the generator casing 240, e.g., the form of fins 241 and holes 242a, used in the first embodiment, and has the same effect.

As shown in Figs. 43 and 44, the generator casings 260 have respective slopes 268b and 268c and bottom drain holes 268a or 203e, which are substantially similar to those of the generator casing 240 of the first embodiment, and have the same effect as those of the generator casing 240.

According to the third embodiment, a generator casing 460 of the (angle type) marine-gear propelling machine 401 shown in Fig. 45 and a generator casing 560 of the (parallel type) marine-gear propelling machine 501 shown in Figs. 46 and 47 have the same construction and the same effect as the generator casing 260 of the sail-drive propelling machine 201 according to the third embodiment.

Next, a sail-drive propelling machine 201 according to a fourth embodiment will now be described.

In the propelling machine 201 of the fourth embodiment as shown in Figs. 48 and 49, a generator casing is equal to the generator casing 240 of the first embodiment integrated with the mounting flange 203b.

The other configuration of the propelling machine 201, e.g., the form of cooling fans 236, 237 and 238, is substantially similar to that of the propelling machine 201 according to the first embodiment. An alternative electric power generator shown in Fig. 50 used in this embodiment is constructed substantially similar to the alternative generator used in the propelling machine 201 of the first embodiment.

A generator casing 270 used in the propelling machine 201 of the fourth embodiment will now be described.

A front flange part 277a projects outward from the front portion of the generator casing 270 to serve as a part fitted to the FW housing 221a. Attachment stays 277c are provided on left and right upper portions of the longitudinal center part of the generator casing 270, respectively. Mounting legs 228 attached to a vessel body through the vibration proof members 229 are attached to the attachment stays 277c so as to mount the propelling machine 201 onto the vessel body.

The other configuration of the generator casing 270, e.g., form of fins 271 and holes 272a, substantially similar to the corresponding configuration of the generator casing 250, e.g., the form of fins 251 and holes 252a, used in the second embodiment, and has the same effect.

According to the fourth embodiment, a generator casing 470 of the (angle type) marine-gear propelling machine 401 shown in Fig. 51 and a generator casing 570 of the (parallel type) marine-gear propelling machine 501 shown in Figs. 52 and 53 have the same construction and the same effect as the generator casing 260 of the sail-drive propelling machine 201 of the fourth embodiment.

In each of the aforesaid embodiments, the casing of the generator 210 is disposing between the flywheel 221 and the transmission 203 considering that the generator 210 is disposed between the engine 202 and the transmission 203 so as to use the output shaft of the engine 202 as its rotor shaft. Alternatively, the casing may be disposed between the flywheel and the engine.

Next, a stern-drive propelling machine 301 according to the first embodiment will be described.

As shown in Figs. 55 and 56, an internal combustion engine 302 has a crankshaft 302a, serving as its output shaft, and a flywheel 321 drivingly fitted on one end of the crankshaft 302a of the internal combustion engine 302. The flywheel 321 is covered with a flywheel housing (hereinafter referred to as "FW housing") 321a.

A generator casing 340 is attached to a rear portion of the FW housing 321a. Components of an electric power generator 310 are built in the generator casing 340. Specifically, stator coils 318 are attached onto the inner peripheral surface of the generator casing 340, and a magnet 312 is arranged radially inward of the stator coils 318 (toward the center). The magnet 312 is fixed to a distance piece 324, which is a rotary member, through a cylindrical attachment member 319. The distance piece 324 is fixed to the flywheel 321, so that the magnet 312 can be rotated integrally with the distance piece 324 and the flywheel 321.

The distant piece 324 is a cylindrical hollow shaft integrally having a flange part 324a on its front end.

The front flange part 324a disposed on the front end of the distance piece 324 is attached to the flywheel 321 so as to be rotated integrally with the flywheel 321.

The distant piece 324 is connected to the input shaft 303a through an elastic joint 325. The elastic joint 325 is positioned behind the distant piece 324 and fixed to the rear surface of the distant piece 324 by an attachment member 320. The stern-drive input shaft 303a is arranged at the center portion of the elastic joint 325. The stern-drive input shaft 303a can be rotated integrally with the elastic joint 325, the attachment member 320 and the distant piece 324.

As shown in Fig. 56, a mounting flange 303b of the transmission 303 can be connected to the generator casing 340 on a side opposite to the FW housing 321 a. By connecting the mounting flange 303b to the generator casing 340, the transmission 303 is attached and fixed to the internal combustion engine 302.

A rotary shaft of the generator 310 is the crankshaft 302a of the internal combustion engine 302, and the crankshaft 302a is arranged coaxially to the (stem drive) input shaft 303a of the transmission. Accordingly, the rotary shaft of the generator 310 is disposed coaxially to the crankshaft 302a and the power take-off shaft 303a.

The power take-off shaft 303a is connected to the distant piece 324 through the elastic joint 325 so as to be rotated by the crankshaft 302a.

A cooling fan is equipped onto the generator 310.

As shown in Fig. 56, a fan 338 is arranged on the outer peripheral surface of the distance piece 324.

The fan 338 is fastened to the attachment member 319 having the magnet 312 fixed thereon by bolts, so as to be fixed to the distant piece 324 together with the attachment member 319. Vanes 238a of the fan 238 are arranged on the rear outer peripheral surface of the distance piece 324. The fan 338 is rotated by rotating the distance piece 324. By providing the cooling fan 338 on the generator 310 as the above, air flows inside the generator casing 340, thereby enhancing the cooling efficiency of the generator 310.

A drain hole 348a is provided at the lower portion of the generator casing 340.

As shown in Figs. 55 and 56, the generator casing 340 is made by casting and the inside of the generator casing is sloped for drafting a casting core. The drain hole 348a is provided at the lower side of a slope 348b in the bottom portion of the generator casing 340.

In the present embodiment, the slope 348b is so constructed that the front side of generator casing 340 (toward the engine) is open wider than the rear side of generator casing 340 (toward the transmission). The drain hole 348a is formed at the front lower portion of the generator casing 340.

The drain hole 348a formed at the lower portion of the generator casing 340 can drain water collected by dew condensation or another reason from the generator casing 340. The slope 348b formed for drafting a core can be effectively used for flowing water.

The other parts of the generator casing 340 are constructed substantially similar to those of the generator casing 240 of the sail-drive propelling machine 201 of the first embodiment.

Next, a stern-drive propelling machine 301 according to the second embodiment will be described.

In the propelling machine 301 of the second embodiment as shown in Fig. 61, a generator casing 350 is equal to the generator casing 340 of the first embodiment integrated with the FW housing 331a and the mounting flange 303b.

The other configuration of the propelling machine 301 of the present embodiment, such as form of the cooling fan 338, are constructed substantially similar to the stern-drive propelling machine 301 of the first embodiment.

Explanation will now be given of an alternative generator.

As shown in Fig. 57, a ring-like rotary member 381 is fixed to the flywheel 321 by bolts 382. An attachment member 319 having a magnet 312 fixed thereon, a fan 338, and an attachment member 320 fitted to an elastic joint 325 are disposed behind the rotary member 381 and fastened to the rotary member 381 by bolts, so that the rotary member 381, the attachment member 319 of the magnet 312, the fan 338 and the elastic joint 325 can be rotated integrally with the flywheel 321.

The attachment member 319 is cylindrical, and the magnet 312 is attached circlewise onto the outer peripheral surface of the attachment member 319.

The cylindrical fan 338 is disposed on the inner periphery of the attachment member 319, i.e., on the outer periphery of the elastic joint 325. Vanes 338a are arranged circlewise at the rear portion of the fan 338.

The elastic joint 325 is arranged behind the rotary member 381, and fixed to the rear surface of the distance piece 324 by the attachment member 320. The power take-off shaft 303a is arranged at the center portion of the elastic joint 325 to be rotatable integrally with the elastic joint 325, whereby the power take-off shaft 303a is rotated by the crankshaft 302a.

Alternatively, shown in Fig. 59, the attachment member 319 with the magnet 320, the rotary member 381 and the attachment member 320 of the elastic joint 325 may be formed integrally so as to serve as a substantially cylindrical attachment member 384 to be fixed to the rear surface of the rotary member 381. The circular magnet 312 is arranged on the outer peripheral surface of the attachment member 384. The vanes 338a of the fan 338 are formed on the rear portion of the attachment member 384. The elastic joint 325 is fixed to the inner surface of the attachment member 384, and the power take-off shaft 303a is arranged at the center portion of the elastic joint 325. Thus, the rotary member 381, the attachment member 319 with the magnet 312, the fan 338 and the elastic joint 325 can be rotated integrally with the flywheel 321, whereby the power take-off shaft 303a is rotated by the crankshaft 302a.

Alternatively, as shown in Fig. 60, an outer ring 313 may be fixed to a rear portion of the cylindrical rotary member 381, and the magnet 312 may be attached onto the outer ring 313. The fan 338 is provided on the rear end face of the outer ring 313. The rotary member 381, the outer ring 313 and the fan 338 are fixed to the flywheel 321 by bolts 315. The attachment member 320 of the elastic joint 325 is fixed in the rotary member 381, and the power take-off shaft 303a is arranged at the center portion of the elastic joint 325. Thus, the rotary member 381, the magnet 312, the fan 338 and the elastic joint 325 can be rotated integrally with the flywheel 321, whereby the power take-off shaft 303a is rotated by the crankshaft 302a.

The generator casing 350 used in the sail-drive propelling machine of the second embodiment is constructed substantially similar to the generator casing 250 of sail-drive the propelling machine 201 of the second embodiment.

Next, a stern-drive propelling machine 301 according to the third embodiment will be described.

In the propelling machine 301 of the third embodiment as shown in Fig. 62, a generator casing 360 is equal to the generator casing 340 of the first embodiment integrated with the FW housing 331a.

The other configuration of the propelling machine 301 of the present embodiment, such as form of the cooling fan 338, is constructed substantially similar to the stern-drive propelling machine 301 of the first embodiment.

The generator casing 360 used in the sail-drive propelling machine of the third embodiment is constructed substantially similar to the generator casing 260 of the said-drive propelling machine 201 of the third embodiment.

Next, a stern-drive propelling machine 301 according to the fourth embodiment will be described.

In the propelling machine 301 of the fourth embodiment as shown in Fig. 63, a generator casing 370 is equal to the generator casing 340 of the first embodiment integrated with the mounting flange 303b.

The other configuration of the propelling machine 301 of the present embodiment, such as form of the cooling fan 338, is constructed substantially similar to the stern-drive propelling machine 301 of the first embodiment. An alternative electric power generator shown in Fig. 58 used in this embodiment is constructed substantially similar to the corresponding generator used in the stern-drive propelling machine of the first embodiment.

The generator casing 370 used in the propelling machine of the fourth embodiment is constructed substantially similar to the generator casing 270 of the sail-drive propelling machine 201 of the fourth embodiment.

### Industrial Applicability of the Invention

A generator of the present invention is disposed between an internal combustion engine and a transmission of the propelling machine. In each of the present embodiments, the generator is disposed between a flywheel and the transmission. Alternatively, the generator may be disposed between the flywheel and the internal combustion engine.

## Claims

1. A power generation system of a vessel comprising:
an internal combustion engine (202, 302) having a crankshaft (202a, 302a);
a flywheel (221, 321) disposed on the crankshaft (202a, 302a);
a transmission (203, 303) for propelling the vessel, having an input shaft (203a, 303a) to be connected to the crankshaft (202a, 302a); and
an electric power generator (210, 310) disposed on a drive train from the flywheel (221, 321) to the transmission (203, 303) for propelling the vessel, the electric power generator (210, 310) including
a permanent magnet (212, 312) used as a rotor of the electric power generator (210, 310), and
a rotary member (213, 224, 313, 319, 324) including the permanent magnet (212, 312), wherein the rotary member (213, 224, 313, 319, 324) is detachably connected to both of the flywheel (221, 321) and the input shaft (203a, 303a) of the transmission (203, 303),
**characterized by**
an elastic joint (225, 325) assembled with the rotary member (213, 224, 313, 319, 324), wherein the rotary member (213, 224, 313, 319, 324) is connected to the input shaft (203a, 303a) of transmission (203, 303) through the elastic joint (225, 325) so that power of the internal combustion engine (202, 302) flows from the flywheel (221, 321) to the rotary member (213, 224, 313, 319, 324), and then flows from the rotary member (213, 224, 313, 319, 324) to the input shaft (203a, 303a) of the transmission (203, 303) through the elastic joint (225, 325).

2. The power generation system of a vessel according to claim 1,
wherein the rotary member (213, 224, 313, 319, 324) is a hollow member, and the flywheel (221, 321), the rotary member (213, 224, 313, 319, 324), the elastic joint (225,325) and the input shaft of the transmission (203. 303) are disposed coaxially.

3. The power generation system of a vessel according to claim 1, wherein the rotary member (213, 224, 313, 319, 324) is connected to both of the flywheel (221, 321) and the input shaft (203a, 303a) of the transmission (203, 303) by bolts (215, 315).

4. The power generation system of a vessel according to one of claims 1 to 3, further comprising:
a single casing (250, 260, 350) housing the flywheel (221, 321) and the electric power generator (210, 310).

5. The power generation system of a vessel according to claim 4, wherein the casing (250) is provided on an outer peripheral surface thereof with a wire extraction part (254, 255) from which an output cable (231, 233) of the electric power generator (210) is extended outward.

6. The power generation system of a vessel according to claim 5, wherein a connector (232) or a terminal stand is provided onto the wire extraction part (254, 255).

7. The power generation system of a vessel according to claim 4, wherein a rectifying and smoothing device (234) is disposed outside of the casing (250) so as to be connected to the electric power generator (210) in the casing (250).

8. The power generation system of a vessel according to one of claims 1 to 3, further comprising:
a flywheel casing (221 a, 321a) housing the flywheel (221,321); and
a generator casing (240, 270, 340, 360, 370) housing the electric power generator (210, 310).

9. The power generation system of a vessel according to claim 8, wherein the generator casing (240, 270, 340, 360, 370) is provided on an outer peripheral surface thereof with a wire extraction part (244) from which an output cable (231, 233) of the electric power generator (210) is extended outward.

10. The power generation system of a vessel according to claim 9, wherein a connector (232) or a terminal stand is provided onto the wire extraction part (244).

11. The power generation system of a vessel according to claim 8, wherein a rectifying and smoothing device (234) is disposed outside of the generator casing (240, 270, 340, 360, 370) so as to be connected to the electric power generator (210) in the generator casing (240, 270, 340, 360, 370).

12. The power generation system of a vessel according to any one of claims 1, 2, 3, 4 and 8, wherein the elastic joint (225, 325) is externally joined to the rotary member (213, 224, 313, 319, 324) facing the transmission (203, 303).

13. The power generator system of a vessel according to any one of claims 1, 2, 3, 4 and 8, wherein the elastic joint (225, 325) is disposed in an inner space of the hollow rotary member (213, 224, 313, 319, 324) so as to be joined to the rotary member (213, 224, 313, 319, 324).

## Patentansprüche

1. Stromerzeugungssystem eines Schiffes, umfassend:
Einen innen liegenden Verbrennungsmotor (202, 302) mit einer Kurbelwelle (202a, 302a),ein Schwungrad (221, 321), das auf der Kurbelwelle (202a, 302a) angeordnet ist;
ein Getriebe (203, 303) zum Antreiben des Schiffes, mit einer mit der Kurbelwelle (202a, 302a) zu verbindenden Eingangswelle (203a, 303a) und
einen elektrischen Generator (210, 310), der an einem Antriebsstrang von dem Schwungrad (221, 321) zu dem Getriebe (203, 303) angeordnet ist, um das Schiff anzutreiben, wobei der elektrische Generator (210, 310) umfasst:
einen Permanentmagneten (212, 312), der als ein Rotor des elektrischen Generators (210, 310) eingesetzt wird, und ein Rotationselement (213, 224, 313, 319, 324), an dem der Permanentmagnet (212, 312) befestigt ist, wobei das Rotationselement (213, 224, 313, 319, 324) sowohl an dem Schwungrad (221, 321) als auch an der Eingangswelle (203a, 303a) des Getriebes (203, 303)abnehmbar befestigt ist,
**gekennzeichnet durch**:
ein mit dem Rotationselement (213, 224, 313,319, 324) montiertes elastisches Anschlussstück (225, 325), wobei das Rotationselement (213, 224, 313, 319, 324) **durch** das elastische Anschlussstück (225, 325) mit der Eingangswelle (203a, 303a) des Getriebes (203, 303) verbunden ist, sodass die Energie des innen liegenden Verbrennungsmotors (202, 302) von dem Schwungrad (221, 321) zu dem Rotationselement (213, 224, 313,319, 324) und dann von dem Rotationselement (213, 224, 313, 319, 324) **durch** das elastische Anschlussstück (225, 325) zu der Eingangswelle (203a, 303a) des Getriebes (203, 303) strömt.

2. Stromerzeugungssystem eines Schiffes nach Anspruch 1,
wobei das Rotationselement (213, 224, 313, 319, 324) ein Hohlelement ist und das Schwungrad (221, 321), das Rotationselement (213, 224, 313, 319, 324), das elastische Anschlussstück (225, 325) und die Eingangswelle des Getriebes (203, 303) koaxial angeordnet sind.

3. Stromerzeugungssystem eines Schiffes nach Anspruch 1, wobei das Rotationselement (213, 224, 313, 319, 324) sowohl mit dem Schwungrad (221, 321) als auch mit der Eingangswelle (203a, 303a) des Getriebes (203, 303) durch Schrauben (215, 315) verbunden ist.

4. Stromerzeugungssystem eines Schiffes nach einem der Patentansprüche 1 bis 3, ferner umfassend:
ein einziges Gehäuse (250, 260, 350), in dem das Schwungrad (221, 321) und der elektrische Generator (210, 310) untergebracht sind.

5. Stromerzeugungssystem eines Schiffes nach Anspruch 4, wobei das Gehäuse (250) auf einer Außenumfangsfläche davon mit einem Drahtausziehteil (254, 255) angebracht ist, von dem ein Ausgangskabel (231, 233) des elektrischen Generators (210) sich nach außen erstreckt.

6. Stromerzeugungssystem eines Schiffes nach Anspruch 5, wobei ein Verbinder (232) oder eine Anschlussklemme auf dem Drahtauszugsteil (254, 255) vorgesehen ist.

7. Stromerzeugungssystem eines Schiffes nach Anspruch 4, wobei eine Ausgleichs- und Glätt-Vorrichtung (234) außerhalb des Gehäuses (250) angeordnet ist, um mit dem elektrischen Generator (210) in dem Gehäuse (250) verbunden zu werden.

8. Stromerzeugungssystem eines Schiffes nach einem der Ansprüche 1 bis 3, ferner umfassend:
ein Schwungradgehäuse (221a, 321a), in dem das Schwungrad (221, 321)untergebracht ist, und
ein Generatorgehäuse (240, 270, 340, 360, 370), in dem der elektrische Generator (210, 310) untergebracht ist.

9. Stromerzeugungssystem eines Schiffes nach Anspruch 8,
wobei das Generatorgehäuse (240, 270, 340, 360, 370) auf einer Außenumfangsfläche davon mit einem Drahtausziehteil (244) angebracht ist, von dem ein Ausgangskabel (231, 233) des elektrischen Generators (210) sich nach außen erstreckt.

10. Stromerzeugungssystem eines Schiffes nach Anspruch 9,
wobei ein Verbinder (232) oder eine Anschlussklemme auf dem Drahtausziehteil (244) vorgesehen sind.

11. Stromerzeugungssystem eines Schiffes nach Anspruch 8, wobei eine Gleichrichter- und Glättungsvorrichtung (234) außerhalb des Generatorgehäuses (240, 270, 340, 360, 370) angeordnet ist, um mit dem elektrischen Generator (210) in dem Generatorgehäuse (240, 270, 340, 360, 370) verbunden zu werden.

12. Stromerzeugungssystem eines Schiffes nach Anspruch 1, wobei das elastische Anschlussstück (225, 325) extern mit dem zum Getriebe (203, 303) orientierten Rotationselement (213, 224, 313, 319, 324) verbunden ist.

13. Elektrisches Generatorsystem eines Schiffes nach Anspruch 1, wobei das elastische Anschlussstück (225, 325) in einem Innenraum des hohlen Rotationselements (213, 224, 313, 319, 324) angeordnet ist, um mit dem Rotationselement (213, 224, 313, 319, 324) verbunden zu werden.

## Revendications

1. Système de production d'énergie d'un bateau comprenant :
un moteur à combustion interne (202, 302) comprenant un vilebrequin (202a, 302a) ;
un volant (221, 321) disposé sur le vilebrequin (202a, 302a) ;
une boîte de vitesse (203, 303) pour propulser le bateau, comprenant un arbre d'entrée (203a, 303a) destiné à être connecté au vilebrequin (202a, 302a) ; et
un générateur d'énergie électrique (210, 310) disposé sur une transmission du volant (221, 321) à la boîte de vitesse (203, 303) pour propulser le bateau, le générateur d'énergie électrique (210, 310) comprenant
un aimant permanent (212, 312) utilisé comme un rotor du générateur d'énergie électrique (210, 310), et
un membre rotatif (213, 224, 313, 319, 324) auquel l'aimant permanent (212, 312) est fixé, le membre rotatif (213, 224, 313, 319, 324) étant connecté de manière détachable à la fois au volant (221, 321) et à l'arbre d'entrée (203a, 303a) de la boîte de vitesse (203, 303),
**caractérisé en ce qu'**
un joint élastique (225, 325) est monté sur le membre rotatif (231, 224, 313, 319, 324), le membre rotatif (213, 224, 313, 319, 324) étant connecté à l'arbre d'entrée (203a, 303a) de la boite de vitesse (203, 303) par le joint élastique (225, 325) pour que l'énergie du moteur à combustion interne (202, 302) circule du volant (221, 321) vers le membre rotatif (213, 224, 313, 319, 324), puis circule du membre rotatif (213, 224, 313, 319, 324) vers l'arbre d'entrée (203a, 303a) de la boîte de vitesse (203, 303) par le joint élastique (225, 325).

2. Le système de production d'énergie d'un bateau selon la revendication 1, dans lequel le membre rotatif (231, 224, 313, 319, 324) est un membre creux, et le volant (221, 321), le membre rotatif (213, 224, 313, 319, 324), le joint élastique (225, 325) et l'arbre d'entrée de la boite de vitesse (203, 303) sont disposés de manière coaxiale.

3. Le système de production d'énergie d'un bateau selon la revendication 1, dans lequel le membre rotatif (231, 224, 313, 319, 324) est connecté à la fois au volant (221, 321) et à l'arbre d'entrée (203a, 303a) de la boîte de vitesse (203, 303) par des boulons (215, 315).

4. Le système de production d'énergie d'un bateau selon l'une des revendications 1 à 3, comprenant en outre :
un boîtier unique (250, 260, 350) logeant le volant (221, 321) et le générateur d'énergie électrique (210, 310).

5. Le système de production d'énergie d'un bateau selon la revendication 4, dans lequel une surface périphérique extérieure du boîtier (250) est munie d'une partie pour l'extraction de fils (254, 255) de laquelle s'étend un câble de sortie (231, 233) du générateur d'énergie électrique (210) vers l'extérieur.

6. Le système de production d'énergie d'un bateau selon la revendication 5, dans lequel la partie pour l'extraction de fils (254, 255) est munie d'un connecteur (232) ou d'une borne terminale.

7. Le système de production d'énergie d'un bateau selon la revendication 4, dans lequel un dispositif de redressement et de lissage (234) est disposé à l'extérieur du boîtier (250) pour être connecté au générateur d'énergie électrique (210) dans le boîtier (250).

8. Le système de production d'énergie d'un bateau selon l'une des revendications 1 à 3, comprenant en outre :
un boîtier pour le volant (221a, 321 a) logeant le volant (221, 321) ; et
un boîtier pour le générateur (240, 270, 340, 360, 370) logeant le générateur d'énergie électrique (210, 310).

9. Le système de production d'énergie d'un bateau selon la revendication 8, dans lequel une surface périphérique extérieure du boîtier du générateur (240, 270, 340, 360, 370) est munie d'une partie pour l'extraction de fils (244) de laquelle s'étend un câble de sortie (231, 233) du générateur d'énergie électrique (210) vers l'extérieur.

10. Le système de production d'énergie d'un bateau selon la revendication 9, dans lequel la partie pour l'extraction de fils (244) est munie d'un connecteur (232) ou d'une borne terminale.

11. Le système de production d'énergie d'un bateau selon la revendication 8, dans lequel un dispositif de redressement et de lissage (234) est disposé à l'extérieur du boîtier du générateur (240, 270, 340, 360, 370) pour être connecté au générateur d'énergie électrique (210) dans le boîtier du générateur (240, 270, 340, 360, 370).

12. Le système de production d'énergie d'un bateau selon la revendication 1, dans lequel le joint élastique (225, 325) est joint extérieurement au membre rotatif (213, 224, 313, 319, 324) face à la boîte de vitesse (203, 303).

13. Le système de production d'énergie d'un bateau selon la revendication 1, dans lequel le joint élastique (225, 325) est disposé dans un espace intérieur du membre rotatif creux (213, 224, 313, 319, 324) pour être joint au membre rotatif (213, 224, 313, 319, 324).
